# EUROPEAN PATENT SPECIFICATION

(11) **EP 1 529 089 B1**
(45) Date of publication and mention of the grant of the patent: **06.06.2012**
(21) Application number: 03788404.6
(22) Date of filing: 13.08.2003
(51) Int. Cl.: C09K 11/06

(54) **THICK RADIATION SENSITIVE DEVICES**
STRAHLUNGSEMPFINDLICHE VORRICHTUNGEN MIT HOHER SCHICHTDICKE
DISPOSITIFS SENSIBLES AUX RAYONNEMENT EPAIS

(30) Priority: 14.08.2002 US 403599 P
(43) Date of publication of application: 11.05.2005
(73) Proprietor: JP LABORATORIES, INC., Middlesex, NJ 08846 (US)
(72) Inventor: Patel, Gordhanbhai, N., Somerset, NJ 08873 (US)
(74) Representative: von Kreisler Selting Werner
(86) International application number: PCT/US2003/025234
(87) International publication number: WO 2004/017095

(56) References cited:
- WO-A-96/21885
- US-A- 4 918 317
- US-A- 5 283 157
- HSU C-K; AL-SHEIKLY M; MCLAUGHLIN W L; CHRISTOU A: "RADIOCHROMIC THIN-FILM SENSOR USING BLUE TETRAZOLIUM IN POLYVINYL ALCOHOL" MATERIALS RESEARCH SOCIETY SYMPOSIUM PROCEEDINGS, THIN FILMS -STRUCTURE AND MORPHOLOGY, vol. 441, 1997, XP008029266
- AL-SHEIKHLY M; MCLAUCHLIN W L; CHRISTOU A; OVACS A: "RADIOCHROMIC BLUE TETRAZOLIUM FILM DOSIMETER" PROCEEDINGS OF THE SYMPOSIUM ON TECHNIQUES FOR HIGH DOSE DOSIMETRY IN INDUSTRY, AGRICULTURE, AND MEDICINE, INTERNATIONAL ATOMIC ENERGY AGENCY, VIENNA, November 1998 (1998-11), pages 59-63, XP008029270
- ABDEL-FATTAH A A ET AL: "Temperature, humidity and time. Combined effects on radiochromic film dosimeters" RADIATION PHYSICS AND CHEMISTRY, ELSEVIER SCIENCE PUBLISHERS BV., AMSTERDAM, NL, vol. 47, no. 4, 1 April 1996 (1996-04-01), pages 611-621, XP004051052 ISSN: 0969-806X
- MCLAUGHLIN W L ET AL: "SENSITOMETRY OF THE RESPONSE OF A NEW RADIOCHROMIC FILM DOSIMETER TO GAMMA RADIATION AND ELECTRON BEAMS" NUCLEAR INSTRUMENTS & METHODS IN PHYSICS RESEARCH, SECTION - A: ACCELERATORS, SPECTROMETERS, DETECTORS AND ASSOCIATED EQUIPMENT, NORTH-HOLLAND PUBLISHING COMPANY. AMSTERDAM, NL, vol. A302, no. 1, 1 April 1991 (1991-04-01), pages 165-176, XP000227702 ISSN: 0168-9002
- VATNITSKY S M: "Radiochromic Film Dosimetry for Clinical Proton Beams" APPLIED RADIATION AND ISOTOPES, PERGAMON PRESS LTD., EXETER, GB, vol. 48, no. 5, 1 May 1997 (1997-05-01), pages 643-651, XP004065297 ISSN: 0969-8043
- RATIVANICH N; RADAK B B; MILLER A; URIBE R M; MCLAUGHLIN W L: "LIQUID RADIOCHROMIC DOSYMETRY" RADIATION PHYSICS AND CHEMISTRY, vol. 18, no. 5-6, 1981, pages 1001-1010, XP008029268

## Description

### BACKGROUND OF THE INVENTION

### Field of the Invention

This invention relates to radiation sensitive devices, such as coatings, films, plaques and blocks, for imaging and monitoring dose of high-energy radiations such as ultraviolet (UV) radiation, electrons, X-rays, protons, alpha particles and neutrons utilizing radiation sensitive material such as diacetylenes. The radiation sensitive devices can be used for monitoring dose in three dimensions. The invention also relates to other radiation sensitive materials, such as leuco and pH sensitive dyes with acid producing compounds. In addition, materials and processes for molding and casting radiation sensitive devices are also provided.

### Background of the Art

High energy radiation, including those having energy higher than 4 eV, such as UV light, X-rays, gamma rays, electrons, protons, alpha particles, neutrons, and laser radiation are used for a variety of applications, such as curing of coatings and cross-linking of polymers, recording images and information, radiography, nondestructive testing and diagnostic and radiation therapy. Their exposure needs to be monitored.

Any material such as a diacetylene, a radiochromic dye, a mixture of leuco and/or pH sensitive dyes with an acid producing compound and alike, or mixture thereof, which undergoes at least one noticeable or monitorable change, such as a change in color, fluorescence, opacity and magnetic resonance, is referred to herein as "radiation sensitive compound", "radiation sensitive material" or "radiation sensitive formulation".

Currently, silver halide film, composed mainly of fine particles of silver bromide/iodide in gelatin is widely used as the film for recording images and information, diagnostic and industrial radiography and monitoring radiation therapy and dose. The main advantages of silver halide film are (1) high spatial resolution, (2) very high final quantum yield, and (3) image/information can be stored permanently. However, silver halide film has many disadvantages and drawbacks: (a) making an emulsion of silver halide is a multi-step and expensive process, (b) the film requires protection from ambient light until fixed, (b) the developing and fixing processes are "wet" and chemical based, and require about five minutes developing time, and the concentrations of individual solutions and chemicals, time and temperature of developing and fixing must be strictly controlled and (c) the image is two-dimensional. Hence, it is desired to have a highly sensitive, self-developing, dry fixing film, which is not affected by white light. Furthermore, there is a need for an inexpensive, dry-processing film for monitoring high energy radiation dosages, storing information and images, nondestructive testing of industrial parts, medical diagnosis, quality control and verification of radiation therapy procedures which has the advantages and desired features of silver halide film with essentially none of its major disadvantages and drawbacks. Such films, based on polymerization of diacetylenes, have been described reported in the literature, e.g., U.S. Patent Nos. 4,734,355 and 5.420,000 and WO 26/21885. The radiation sensitive film is prepared by coating a solution or an emulsion of a diacetylene in a polymeric binder on a plastic film. Preparation of the radiation sensitive film by this technique requires evaporation of the solvent. As a result, the thickness of coating is usually limited to less than about 30 microns. The sensitivity of the diacetylene film is about fifty times lower than that of silver halide film for certain applications. If the coating of the diacetylene film is fifty times thicker, fifty times lower dose can be monitored. However, it is not practical to make such a thick coating from a solution or emulsion because it is not possible to dry such a thick coating using the conventional drying ovens and processes. Hence, there is a need for a technique for making thick coatings of such radiation sensitive materials.

Thick plaques and blocks of a variety of plastics are routinely casted from their monomers or oligomers such as polyacrylics. Thick coatings, films, fiber, plaques or blocks are also prepared by reacting a monomer or oligomer with another reactant. For example, (1) an epoxy polymer can be prepared by reacting an epoxide, preferably an oligomeric epoxide with a primary amine or a diepoxide with a di-secondary amine, and (2) a polyurethane/polyurea can be prepared by reacting a diisocyanate, preferably an oligomeric, with a diol or diamine, preferably an oligomeric diol or diamine. By selecting a proper molecular weight and nature of the amines or other catalysts, one can control the rate of polymerization or curing. These non-diacetylenic monomers and oligomers are referred to hereafter as pre-polymers. It is possible to make a mixture of these pre-polymers and diacetylenes followed by the polymerization of the pre-polymers. A film, plaque or block containing diacetylene can be easily prepared by crystallization of a diacetylene in a pre-polymer followed by polymerization of the pre-polymer or vice versa. For a given concentration of the diacetylene, a one hundred times thicker film or plaque will able to monitor a one hundred times lower dose. A shaped-articles containing a radiation sensitive material such as diacetylene can be prepared by (1) crystallization of diacetylene in one of the liquid pre-polymers, (2) mixing it with an appropriate amount of the other pre-polymer and (3) casting or molding the mixture in the desired form.

Essentially any regular or irregularly shaped-article can be produced by molding, i.e., injecting a molten polymer in to a mold. Radiation sensitive shaped-article, such as fiber, film, plaque, rod, and block can be prepared by melt mixing or dissolving radiation sensitive materials such as diacetylenes in a molten polymer followed by molding into the shaped-article.

Coatings, films, fiber, rods, plaques or blocks, with or without radiation sensitive material such as a diacetylene, are individually or collectively, referred hereafter to as "shaped-articles", "radiation sensitive shaped-articles", "radiation sensitive devices" or simply "devices". The process of molding or casting the coatings, films, fibers, plaques or blocks from pre-polymers or polymers is referred hereafter to as molding-process, molding-technique, casting-process, casting-technique or in general shaping-technique or shaping-process. The resultant shaped-articles will develop color upon irradiation due to the polymerization of the diacetylene. The shaped-articles will be able to monitor a greatly lower dose of X-ray because of the greater thickness.

The molding-technique can provide radiation sensitive shaped-articles of unlimited thickness, size and shape, e.g., from a thin coating/film to thick plaque/bloclc/shaped-articles. Molding-technique includes processes of mixing/dissolving a diacetylene in a pre-polymer or a molten polymer. A formulation containing a mixture of, dissolved or dispersed, a radiation sensitive material and a pre-polymer or polymer, or like formulation from which one can prepare shaped-articles is referred herein to as "molding mixture", "molding formulation" or "shaping formulation".

Conformal radiotherapy aims to maximize tumor dose while minimizing the dose to the surrounding healthy tissue through the use of complex radiation therapy treatment planning and dose delivery systems. Currently new treatment planning techniques are being developed including CT-based virtual treatment simulation, and 3D (three dimensional) planning for conformal treatments with applications to both external beam and brackytherapy treatment modalities. Brackytherapy is the placement of small radiation sources within or near the tumor. Radioactive sources such as Ytterbium-169 and Iodine-125 seeds are used for brackytherapy.

Gel Dosimetry is a technique in which radiation sensitive gels are used to record and measure the distribution of absorbed radiation dose in tissue-like materials. These measurements are used to verify dose calculations and dose delivery techniques in radiation therapy. In 1984, Gore et al, [J. C. Gore, Y.S. Kang and R. J. Schulz, Phys. Med. Biol. Vol. 29, 1189 (1984)] demonstrated that magnetic resonance imaging (MRI) can be used to measure dose distributions produced by ionizing radiation absorbed in tissue-equivalent gels containing ferrous ions. In these so-called Fricke-gels [L.E. Olsson, A. Franson, A. Eriksson and S. Mattsson, Phys. Med. Biol. Vol. 35, 1623. (1990)] free radicals (produced by radiolysis of water) oxidize ferrous ions into ferric ions. As ferric ions produce a stronger paramagnetic enhancement of the water-proton NMR relaxation rate, their distribution may be determined by MRI. Maryanski et al, US Patent #5,633,584, introduced a system based on radiation induced polymerization and crosslinking of acrylic monomers, which are uniformly dispersed in an aqueous gel. The formation of crosslinked polymers in the irradiated regions of the gel increases the NMR relaxation rates of neighboring water protons. Polymerized regions can be seen visually, as the crosslinked polymer is insoluble in water and precipitates from the aqueous phase of the transparent gel, which therefore becomes increasingly opalescent (and ultimately white) as the radiation dose increases. However, this system has many drawbacks, such as (1) sensitivity to visible blue and UV lights, (2) high sensitivity to temperature of irradiation, (3) short shelf life, e.g., a few weeks at room temperature, (4) very high sensitivity to oxygen, (5) short archival life, e.g., readings should be taken within a week, (6) toxic vinyl monomers require special handling and disposal, (7) not being self-supporting requires a glass container, (8) image is opaque and not in colors, and (9) during the measurement the light is scattered and hence one has to map with NMR technique. Hence, there is a need for a 3D dosimetry system, which does not have the above drawbacks.

Gel dosimetry has one basic and fundamental flaw that the image can be destroyed by melting the gel above a predetermined temperature, for example for gelatin, by heating the irradiated gel above ∼45°C. Hence, there is a need for a system, where the image can't be easily tampered and if tampered it should be evidenced. If dyes are used as an indicator, then they can diffuse as the temperature of the gel is increased or melted. Many of the dyes undergo reversible color change or can be tampered with other chemicals or processes. For example, an image created by a pH sensitive dye, can be altered by changing the pH. Hence, there is a need for an indicating material, which once exposed to radiation and image is produced, can't be reversed and matrix or binder can't be easily melted. We have discovered that such system can be created by using thermoset polymers as binders and diacetylenes as indicators.

There is strong need for validation of complex radiation therapy treatment. Magnetic resonance (MR) and optically,measured dose distributions of Fricke and polymer gels, multiple stacked radiochromic films and multiple point-dose measurements have been developed for suck validation.

For validation of software Gel Dosimetry Analysis can be used. With this program, dose distribution in 3D can be visually and quantitatively compared to the corresponding measured 3D dose data set using automatic registration and an assortment of color graphic tools. This unique, three-dimensional physical representation of the dose in tissue is an extremely effective way of having patients, students and trainees comprehend key concepts of dosimetry and the radiation sensitive shaped-articles leave a lasting impression that is much more readily understood than mere graphs and isodoses.

The image produced in shaped-articles can be scanned with techniques, such MRI and optical. An optical scanner may incorporate a laser, photodiode detectors, and a rotating platform for the shaped-article or alternatively a lamp, color filter, light diffuser, rotating platform for the block and a digital camera and/or similar optical scanning system. Data can be acquired for each incremental rotation of the platform. Using the set of optical-density projections obtained, a cross-sectional image of the radiation field is then reconstructed. Doses can be determined from calibration data of optical density and dose and optical density measurement. Optical scanners are described in U.S. Pat. Nos. 5,321,357 and 6,218,673 and by Mark Oldham, J.H. Siewerdsen, Anil Shetty, and D.A., Jaffery, Med. Phys., vol. 28,1436 (2001).

A plastic block prepared by the shaping technique containing diacetylene or other radiation sensitive material would eliminate most of the drawbacks of the gel dosimetry. The block will be essentially muscle tissue equivalent in both elemental composition and density. The radiation sensitive material in the block will develop color in proportion to radiation dose, thereby creating a permanent three-dimensional image of dose distributions in the block. Quantitative 3D dosimetry data can be calculated from the scans of the block using MRI or optical scanning. Tomographic analysis of an irradiated polymer block can yield important dosimetry data for the new and highly complex treatment modalities which are being introduced into radiation oncology such as stereotactic radiosurgery, conformal radiation therapy, the dynamic wedge, scanning electron beams and energy-modulated proton beams.

The radiation sensitive shaped-articles such as plaques and/or block can be used for, monitoring and imaging, e.g., (1) personnel and area dosimeters, (2) radiographic films (3) determining dose in three dimensions, and (4) imaging radiation sources.

One class of materials that can be used in the system are diacetylenes, R-C=C-C=C-R, where R is a substituent group. Diacetylenes polymerize in the solid state either upon thermal annealing or exposure to high-energy radiation [Adv. Polym. Sci., vol. 63, 1 (1984)]. The term diacetylene(s) is used herein to designate a class of compounds having at least one -C=C-C=C- functionality. The solid monomers are colorless or white, the partially polymerized diacetylenes are blue or red, while the polydiacetylenes are metallic being usually a copper or gold color. Polydiacetylenes are highly colored because the "pi" electrons of the conjugated backbone are delocalized. The color intensity of the partially polymerized diacetylenes is proportional to the polymer conversion.

A number of patents have been issued on the synthesis and use of conjugated polyacetylenic compositions as radiation dosimeters, temperature monitors, and time temperature indicators.

The use of diacetylenes in photographic and other related arts is disclosed in several U.S. Patents, such as, U.S. Patent Nos. 3,501,297 and 3,679,738 (issued to Cremeans), U.S. Patent No 3,501,302 (issued to Foltz), U.S. Patent Nos. 3,501,303 (issued to Foltz et al), U.S. Patent No. 3,501,308 (issued to Adelman) and U.S. Patent Nos. 3,743,505; 3,844,791 & 4,066,676 (all three issued to Bloom). These patents disclose dispersions in resin, gelatin, or gum matrices of certain diacetylene crystals for directly imaging photo-reactive compositions. Light exposed areas are evidenced by a color change.

Diacetylenes are not sensitive to visible radiation (long wavelength). Luckey and Boer in U.S. Patent No. 3,772,027 disclose a diacetylenic photosensitive element containing inorganic salts, such as titanium dioxide, zinc oxide, cadmium iodide, and cadmium sulfide as sensitizers to make the element sensitive to visible radiation. Another similar patent U.S. Patent No. 3,772,028) issued to Fico and Manthey discloses a photosensitive element sensitized to visible radiation by the addition of pyrylium salts including thiapyrylium and selenapyrylium salts. Amplification of poorly imaged crystalline diacetylenic compositions is obtained in U.S. Patent No. 3,794,491 (issued to Borsenberger et al). Faint images are enhanced through post-exposure irradiation. These patents describe formulations and processes for making diacetylenes sensitive to longer wavelength (lower energy) radiation, such as visible radiation so that the film can be used as a photographic film for visible light. U.S. Patent No. 5,420,000 reports on the sensitization of diacetylenes to shorter wavelength (higher energy) radiation, such as UV, X-rays, electrons and alpha particles. Such sensitization to higher energy radiation is desirable for making, for,example, diagnostic X-ray film.

Lewis, Moskowitz, and Purdy in U.S. Patent No. 4,734,355 disclose a processless recording film made from crystalline polyacetylenic compounds. They also disclosed a process of dispersing crystalline polyacetylenic compounds in a non-solvating medium to a concentration of about 2% to 50% polyacetylene crystalline solids and aging said dispersion before drying on a substrate. The sensitivity of the obtained film is low and hence exposure of at least ten Gy of radiation is required to produce the image.

Guevara and Borsenberger in U.S. Patent No. 3,772,011 describe printout elements and methods using photoconductors and crystalline polyacetylenic compounds in contact with a photoconductive layer. Visible images are obtained when these layers are contacted with the application of an electric potential. In the absence of an applied potential, the elements described are stable under normal room-light handling conditions. Guevera et al in U.S. Patent No. 3,772,011 provides a diacetylenic composition, which undergoes direct image-wise photo-polymerization to a highly colored polymeric product when elaborated into a layer of micro-crystals contiguous to a photoconductive layer. Such polymerization takes place upon exposure during the application of an electric potential across the layers. In some cases, an organic photoconductor may be included in the layer of crystalline polyacetylenes.

Patel in U.S. Patent No. 4,235,108; 4,189,399; 4,238,352; 4,384,980 has disclosed a process of increasing the rate of polymerization by cocrystallization of diacetylenes. Patel and others in U.S. Patent Nos. 4,228,126; and 4,276,190 have described an inactive form of diacetylenes for storing and method of rendering them active prior to use by solvent, vapor and/or melt recrystallization.

Mong-Jon Jun at el (U.S. Patent No. 3,836,368) describe 2,4-hexadiyn-1,6-bis(n-hexyl urethane), referred to here in as "166", which turns red upon short wavelength UV irradiation. They prepared a coating formulation by adding water to a solution of 166 in polyvinylpyrrolidone in methanol. U.S. Patent No. 5,420,000 described a highly sensitive coating of 166. Although 166 is sensitive to UV radiation, the reactivity is not sufficient to use it for applications, such as diagnostic X-ray film.

None of the above described patents describe a system such as a thick coating, film, plaque and/or block, and processes of making them by the shaping technique, which can be used for radiation monitoring and imaging, e.g., (1) personnel dosimeter, (2) radiographic film, (3) imaging of radiation sources and (4) determining dose in three dimensions.

Silver halide film is not very sensitive to diagnostic X-ray radiation. X-ray images are amplified by placing the film between two fluorescence screens known as intensifying screens. Intensifying screens are luminescent materials and usually consist of a crystalline host material to which is added a trace of an impurity. Luminescence in inorganic solids usually originates at defects in the crystal lattice (Thomas F. Soules and Mary V. Hoffman, Encyclopedia of Science and Technology, Vol. 14, 1987, pp527-545). The phosphor of the fluorescence screen absorbs X-rays and emits near UV or visible light. Intensifying screens made with calcium tungstate phosphors have been in use since the time of Roentgen. Around 1972, a new phosphor, gadolinium oxysulfide was developed which emits in the green region and film sensitized to absorb green light was developed. About the same time other phosphors, such as barium fluorochloride and lanthanum oxybromide, which emit in the blue region, were developed. A large number of phosphors have been reported in the literature including terbium activated rare earth oxysulfide (X₂O₂S where X is gadolinium, lanthanum, or yttrium) phosphors (T.F. Soules and M.V. Hoffman, Encyclopedia of Chemical Technology, Vol.14, pp 527-545, 1981 and references quoted therein). Gadolinium and tungsten have very high atomic numbers and also have a high-energy absorption coefficient. The following combinations have been used for this purpose: GdOS:Tb(III), LaOS:Tb(III), LaOBr:Tb(III), LaOBr:Tm(III), and Ba(FCl)₂:Eu(II). A number of patents e.g. U.S. Patent Nos. 5,069,982; 5,173,611; 4,387,141; and 4,205,234 are representative and have been issued. Among the hundreds of phosphors reported, the literature search reveals that most of them are blue-, green-, or long wave-UV emitting phosphors upon excitation by X-ray. Some of them emit long wavelength blue light, for example, U.S. Patent No. 4,719,033. No one has so far reported an X-ray screen with a short-wave UV emitting (e.g., wavelength shorter than 275 nm) phosphor.

Convertors/phosphors are usually used as a screen in the form of a fine powder dispersed in a polymeric binder. The screens are placed in contact with the emulsion of silver halide film during X-ray irradiation. The prior art does not describe a convertor/phosphor, which is in the form of a transparent coating being a solid solution or complex of a convertor with a polymeric binder. The use of these convertors in the 10 under coat, radiation sensitive coat and topcoat of the device is also not described. The phosphors emitting short wavelength UV light can be used as a screen to amplify the radiation image.

### SUMMARY OF THE INVENTION

Recently, we have been successful in inventing some shaping-techniques, which provide radiation sensitive shaped-articles of unlimited thickness/size/shape, e.g., from a thin coating to large block. Under the shaping-technique, a diacetylene is dissolved and/or crystallized, at least from one of the reactants (e.g., an oligomeric diol) and then mixed with the other reactant (e.g., an oligomeric diisocyanate) or in the mixture of the reactants. A catalyst is added to the mixture for their polymerization. The shaping-mixture can then be coated on a substrate or casted into a film, plaque or block.
No solvent, which requires evaporation or removal is used in the process.
The invention thus provides
(1) a radiation sensitive device for monitoring radiation dose comprising at least one radiation sensitive material in a polymeric binder wherein said radiation sensitive material is capable of undergoing an observable change when contacted with radiation wherein said device is rod-like with an aspect ratio of below 20:1, or is block-like and has an aspect ratio of less 5:1;
(2) a process of making a radiation sensitive molded or casted shaped polymeric device for monitoring radiation dose prepared by polymerization of at least one monomer or oligomer containing at least one radiation sensitive material capable of developing or undergoing a color, fluorescence, or opacity change when exposed to UV, X-ray, gamma ray, electron, protons, alpha particles or neutron radiation activator wherein said device is rod-like with an aspect ratio of below 20:1, or is block-like and has an aspect ratio of less 5:1;
(3) a process of making a radiation sensitive molded or casted shaped polymeric device for monitoring radiation dose prepared by solidification of molten polymer containing at least one radiation sensitive material capable of developing or undergoing a color, fluorescence, or opacity change when exposed to radiation wherein said device is rod-like with an aspect ratio of below 20:1, or is block-like and has an aspect ratio of less 5:1;
(4) a method of imaging and measuring a three-dimensional dose distribution of a radiation source in the device of claim 1 comprising the steps of irradiating said device such that the optical properties are changed upon irradiation, optically scanning the object at various angles, detecting and measuring light projection data indicative of optical changes in the device, calibrating the optical change in the device to the dose of the energy; and mapping the dose of the energy in the object;
(5) an optical tomographic scanner for imaging optical properties of device of claim 1 comprising at least one light source for illuminating the device, at least one light detector for measuring light that has interacted with the object, a mechanism that controls the relative motion of the object, the light source or sources, and the light detector or detectors, a tank filled with a liquid in which the object is immersed for refractive index matching, so that the light rays passing through the device are propagated in straight lines; and a computer for controlling the scanner mechanism and for calculating the three dimensional distribution of optical properties inside the object; and
(6) a method of detecting, measuring and displaying a non-uniform dose of radiation or by forming a visible permanent three dimensional image in said device of (1) above wherein said three dimensional image is representative of the three dimensional distribution of dose of said radiation to which said device is exposed.
In the invention we utilized several oligomeric diol and triols including glycerol propoxylate, poly(1,4-butylene glutarate) hydroxy terminated, polycaprolactone triol, poly[di(ethylene glycol) phthalate] diol, polyester-block-polyether alpha omega-diol, 25 poly(ethylene-co-1,2-butylene) diol, poly(ethylene-co-1,2-butylene) diol, poly(ethylene glycol), poly(propylene glycol), poly(ethylene glycol)-poly(propylene glycol), poly(hexamethylene carbonate) diol, polytetrahydrofuran, polyurethane diol, and poly(ethylene-co-1,2-butylene) mono-ol as a class of pre-polymer for making shapedarticle with diacetylenes and radiochromic dyes.

The pre-polymeric diols mentioned above were reacted with di and polyisocyanates including poly(hexamethylene diisocyanate), poly(propylene glycol) tolylene 2,4-diisocyanate terminated, poly(1,6 hexamethylene diisocyanate) trimeric, poly[(phenyl isocyanate)-co-formaldehyde] and several commercially available diisocyanates, e.g., hexamethylene diisocyanate, Lord Chemical UR-312 Resin, Lord Chemical UR-324 Resin and Tadco isocyanate Formula 11B51A.

The radiation sensitive shaped-articles were also obtained by dissolving radiation sensitive materials, e.g., diacetylenes in monomeric and oligomeric pre-polymers such as acrylics followed by polymerization of the pre-polymers with a catalyst, such as benzoyl peroxide. A promotor (e.g., N,N-Dimethyl-p- toluidine) was used for rapid polymerization of the pre-polymers at a lower temperature. Diacetylenes were crystallized either by cooling the mixture prior to polymerization of the pre-polymers or by cooling the polymerized system at a lower temperature. Optionally, a solvent for diacetylene was used to adjust the temperature required for crystallization of the diacetylene. Desired size of the diacetylene crystals and' radiation sensitivity was obtained by controlling a variety of parameters such as nature and concentration of diacetylene, nature of pre-polymer, nature and concentration of solvent for diacetylene and pre-polymer, nature and concentration of plasticizer, nature and concentration of promoters and catalysts for polymerization of pre-polymers and other additives such as UV absorbers and antioxidants.

We also found that radiation sensitive materials such as diacetylenes can be added in a molten polymer and the mixture can then be molded into a thin film, plaque and/or block. Upon cooling the mixture, diacetylenes crystallize into fine crystals, which polymerize into colored polymers upon irradiation with ionizing radiation. The conventional method of making shaped objects can be used to make radiation sensitive shaped objects.

The shaping-mixture of a diacetylene can also be coated with a variety of coating techniques, e.g., gravure, flexo, air knife, brush, calendar, cast coating, curtain, dip, extrusion, blade; floating knife, kiss roll, off-set, reverse roll, rod, spray, squeeze roll and wire wound rod on a substrate e.g., a polyester film. The coating can become solid in seconds to minutes. The substrate can be coated on both the sides with the shaping mixture. A self-supporting film can be prepared by pouring/coating the shaping mixture on a substrate e.g., plastic Him/belt, having a release coat of silicone or Teflon^{R}. Once the coating is set or becomes solid, it can be peeled off from the substrate. The release coat will prevent the film of diacetylene/polymer from sticking to the substrate. The self-supporting, radiation sensitive film can also be made from the shaping mixture by the conventional methods such as melt extrusion, of making film. This film can be used as a diagnostic, portal and verification film. A piece of the film can be used as a dosimeter.

The thickness of the X-ray films is usually about 200 microns. One can mold a film of diacetylene having similar thickness. While X-ray film has thin coatings of silver halide in gelatin on both the sides of a polyester film, this entire diacetylene film will be reactive to radiation. Thus, the lower radiation sensitivity of the diacetylene film will be compensated with higher thickness.

Shaped radiation sensitive articles can be obtained by pouring the mixture containing pre-polymer, diacetylene and other additives into a properly shaped mold' and letting the pre-polymer polymerize.

We have also discovered that self-developing shaped-articles such as film, plaque and blocks prepared by shaping-techniques for monitoring dose, recording and imaging with radiation, such as UV light, electrons, X-rays, neutrons, or gamma rays, can be made by the use of at least one radiation sensitive material such as diacetylenes, a binder such as polyurethane, polyacrylics, and polystyrene, optionally having a solvent, an activator, converter material, capable upon radiation with high energy electrons, X-rays, gamma rays, neutrons, of generating secondary radiation which is capable of inducing polymerization of the diacetylene to form a colored image.

Particularly useful is a specific diacetylene (R-C=C-C=C-R), 166 where [R = -CH₂OCONH(CH₂)₅CH₃] and a few closely related diacetylenes which have several unique properties, such as high radiation reactivity, low thermal reactivity, crystallization to an inactive phase from melt, and therefore heat fixable. In addition, 166 undergoes a red-to-blue color change when the partially polymerized 166 is heated near or above its melting point. A preliminary toxicity study indicates that 166 is nontoxic.

Other diacetylenes that can be used are 155 [R-C=C-C=C-R, where R = - CH₂OCONH(CH₂)₄CH₃], 156 [R'-C=C-C=C-R", where R' = -CH₂OCONH(CH₂)₅CH₃ and R" = - CH₂OCONH(CH₂)₄CH₃] and 16PA [ R'-C=C-C=C-R", where R' = - CH₂OCOCH₂C₆H₅ and R" = -CH₂OCONH(CH₂)₅CH₃]. They also have very high radiation reactivity and undergo a phase change, from an active to inactive, when heated near or above their melting points and can be used for making the system. Diacetylenes, such as 155, 156 and 16PA can cocrystallize with 166 to increase the radiation reactivity. Specifically, the 85:15 mixture of 166:156 is a preferred diacetylene mixture for the system.

A variety of other diacetylenes, both liquid and solid, such as tricosa-10,12-diynoic acid (TC), pentacosa-10,12-diynoic acid (PC), methylester of TC and PC and 4BCMU [5,7-dodecadiyn-1,12-bis(n-butoxycarbonyl methylurethane), R-C=C-C=C-R, where R = (CH₂)₄OCONHCH₂COO(CH₂)₄H] can also'be used. The other diacetylenes that can be used are described in U.S. Patent Nos. 4,215,208; 5,149,617 and 5,095,134.

By this invention there is provided a self-developing shaped-articles such as film, plaque and block prepared by a shaping-technique for developing an image from exposure, to X-ray, gamma ray, electron, or neutron radiation comprising at least one radiation sensitive material such as a diacetylene, capable of undergoing a color change when contacted with ultraviolet light, X-rays, alpha particles, or electrons, thereby forming an image; a binder such as polyurethane, polyatrylics, and polystyrene, optionally having a solvent, an activator, converter material, capable upon radiation with high energy electrons, X-rays, gamma rays, neutrons, of generating secondary radiation which is capable of inducing polymerization of the diacetylene to form a colored image.

Furthermore, there is also provided self-developing shaped-articles such as film, plaque and block prepared by a shaping-technique for developing an image from exposure to narrow or coherent beam such as laser of ultraviolet and other high energy radiation comprising of at least one radiation sensitive material such as diacetylene capable of undergoing a color change when contacted with said radiation, thereby forming an image, wherein said image is capable of being fixed by heating.

Furthermore provided are processes of preparing self-developing, radiation sensitive shaped-articles such as film, plaque and block by a shaping-technique, whereby a radiation sensitive material is dissolved or dispersed in at least one pre-polymer followed by casting into a shaped-article.

Further provided is a process of cooling radiation sensitive mixture and shaped-article to a lower temperature for making radiation sensitive material sensitive to radiation.

Further provided is a means of controlling the size of the crystals of diacetylenes, by controlling the effects of many parameters, including (1) the nature and concentrations of diacetylenes, plasticizers, additives, pre-binders, and nucleating agents, (2) temperature of dissolution of diacetylenes, (3) rate of quenching the mixture/solution, (4) nature and concentration of solvent, (5) temperature at which the solution/mixture are cooled, and (6) temperature of crystal growth.

Further provided is a method of making the fine dispersion of radiation sensitive materials, e.g., diacetylenes, which involves making a solution of diacetylenes in at least one pre-polymer, quenching the mixture at a lower temperature to freeze the mixture and then thawing the solid at a higher temperature for growing crystals of the diacetylenes.

Further provided are means of protecting the radiation-sensitive materials from ambient ultraviolet light by incorporating an appropriate amount of UV absorbers, such as maleic acid, sodium salicylate, 2-ethylhexyl salicylate, octyl methoxycinnamate, benzophenone, benzophenone tetracarboxylate or finely grinded pigments into the binder or into a top coat. The UV absorbers are not added into the topcoat when screens emitting UV lights, are used to amplify the image or used for imaging with UV laser or UV light.

Further provided are methods for the utilization of the radiation-sensitive shaped-articles for monitoring radiation dose, using film for recording images and information, for diagnostic and industrial radiography and for monitoring radiation therapy and using plaques and blocks for imaging sources and monitoring dose in three dimensions.

Further provided is a method of irradiation of radiation sensitive shaped-articles such as plaque and block with high energy radiation such as X-ray, protons, neutrons and electrons, producing an image of the source and the beam, scanning the image with a scanner and determining dose distribution in three dimensions.

There is provided methods of making radiation sensitive shaped-article such as film, plaque and block by mixing radiation sensitive materials and polymerizable monomers and oligomers followed by polymerization of the monomers and oligomers.

There are provided methods of making radiation sensitive shaped-articles such as film, plaque and block by mixing radiation sensitive materials with molten polymers followed by cooling.

There is also provided a process of making a radiation sensitive molded or casted shaped polymeric device including coating, film, fiber, rod, plaque and block for monitoring radiation dose of UV, X-ray, gamma ray, electron, protons, alpha particles or neutron radiation prepared by polymerization of at least one mono and difunctional monomer or oligomer containing at least one radiation sensitive material capable of developing or undergoing a color, fluorescence, or opacity change, with or without activator, when contacted with UV, X-ray, gamma ray, electron, protons, alpha particles or neutron, and optionally additives such as UV absorber, convertor, surfactant and solvent.

There is also provided a process of making radiation sensitive molded or casted shaped polymeric devices including coating, film, fiber, rod, plaque and block for monitoring radiation dose of UV, X-ray, gamma ray, electron, protons, alpha particles or neutron radiation prepared by solidification of molten polymer containing at least one radiation sensitive material capable of developing or undergoing a color, fluorescence, or opacity change, with or without activator, when contacted with UV, X-ray, gamma ray, electron, protons, alpha particles or neutron, and optionally additives such as UV absorber, convertor, surfactant and solvent.

There is also provided, a process of irradiation of a radiation sensitive device with UV, X-ray, gamma ray, electron, protons, alpha particles or neutron radiation thereby producing a noticeable or recordable change in the device

There is also provided a process of irradiation of a radiation sensitive device at a lower temperature and monitoring the change at a higher temperature.

There is also provided a method for monitoring high energy radiation comprising the step of placing the radiation sensitive shaped-article in the path of UV, X-ray, gamma ray, electrons, protons, alpha particles or neutron radiation and monitoring the radiation dose by monitoring the change caused by the radiation and monitoring the dose by monitoring the change.

There is also provided a process of monitoring dose in three dimensions comprising steps of irradiation of radiation sensitive device and scanning the device.

There is also provided a method of imaging and measuring a three-dimensional dose distribution of a radiation source in the radiation sensitive device comprising the steps of irradiating the device such that the optical properties are changed upon radiation, optically scanning the object at various angles, detecting and measuring light projection data indicative of optical changes in the device, calibrating the optical change in the device to the dose of the energy; and mapping the dose of the energy in the device.

There is also provided an optical tomographic scanner for imaging optical properties of the radiation sensitive device comprising at least one light source for illuminating the device, at least one light detector for measuring light that has interacted with the device, a mechanism that controls the relative motion of the device, the light source or sources, and the light detector or detectors, a tank filled with a liquid in which the object is immersed for refractive index matching, so that the light rays passing through the device are propagated in straight lines; and a computer for controlling the scanner mechanism and for calculating the three dimensional distribution of optical properties inside the device.

There is also provided a method of detecting, measuring and displaying a non-uniform dose of radiation by forming a visible permanent three dimensional image in the radiation sensitive device which is representative of the three dimensional distribution of the dose of a radiation source to which the device is exposed, which comprises exposing the device.

### BRIEF DESCRIPTION OF THE DRAWINGS

Figure 1. A schematic cross-section of one embodiment of the film device of the invention where a substrate is coated on one side with the radiation sensitive layer.

Figure 2. A schematic cross-section of another embodiment of the film device where a substrate is coated on both sides with the radiation sensitive layer.

Figure 3. A schematic cross-section of the self-supporting film.

Figure 4. A schematic cross-section of the plaque dosimeter.

Figure 5. A schematic cross-section of the block dosimeter.

Figure 6. A side view representation of a block dosimeter exposed to 10 Gy of 100 KVP X-ray.

Figure 7. A top view representation of a block dosimeter exposed to 10 Gy of 100 KVP X-ray.

Figure 8. A representation of an image taken across a scanned image of summation of 16 single transverse adjacent slices through the center of the cylindrical sample identical to that shown in Figure 7.

Figure 9. The density profile and isodose plot across the transverse image of Figure 8.

Figure 10. A schematic representation of a scanning device for reading an image in an inventive device.

### DETAILED DESCRIPTION OF PREFERRED EMBODIMENTS

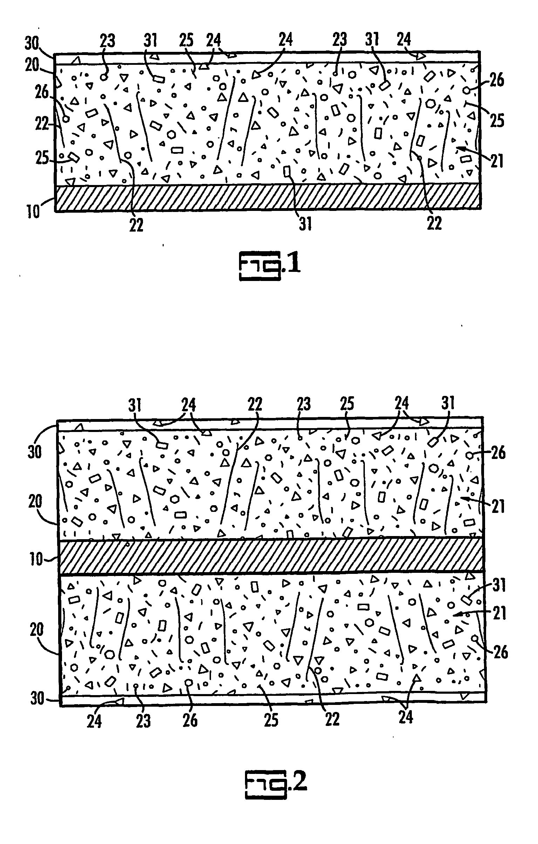

The invention can be best described by reference to the Figures. Referring to Figure 1, the radiation sensitive shaped-article, in its simplest form is comprised of a substrate 10 having at least one radiation sensitive layer 20 comprised of at least one radiation sensitive composition 21, a polymeric binder 22, optionally a solvent 23, a convertor 24 for converting high energy incident radiation to low energy radiation, a plasticizer 25 and other additives 26 such as an activator. The substrate 10 may have a substratum layer, i.e. undercoat for increasing adhesion between the substrate 10 and the radiation sensitive layer 20. The radiation sensitive layer, 20 may have a topcoat 30 which may contain additives, such as a convertor 24 and a UV absorber 31. In order to protect the radiation sensitive layer from ambient light and mechanical abuses (scratches/abrasion) the device can also have a protective layer. The device can have more than one radiation sensitive layer and can be made from different radiation sensitive formulations to provide different properties such as colors.

The lowest detection limit of the dose can be reduced to half as illustrated in Figure 2 by having the radiation sensitive layer 20 and topcoat 30 on both the sides of the substrate 10. The radiation sensitive layer on each side may be the same or made from different radiation sensitive formulations to produce different colors and there could also be more than one layer on each side.

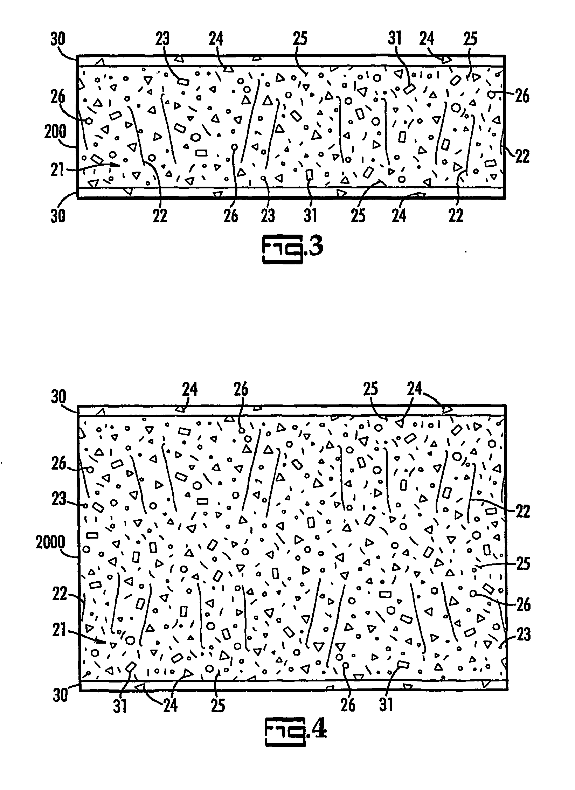

As shown in Figure 3, the device can be a self supporting film comprised of at least one radiation layer 200, comprised of at least one radiation sensitive composition 21, a polymeric binder 22, and optionally a solvent 23, a convertor 24, a plasticizer 25 and other additives 26 such as activator. The radiation sensitive self-supporting layer 200 may have a topcoat 30 which may contain additives, such as a convertor 24 and a UV absorber 31. In order to protect the radiation sensitive layer from ambient light and mechanical abuses (scratches/abrasion) the plaque can also have a protective layer.

A much lower dose can be monitor by casting or molding the device in form a thick, e.g., 0.1 to 10 mm thick plaque, as shown in Figure 4. The plaque may be comprised of at least one radiation sensitive thick layer 2000, comprised of at least one radiation composition 21, a polymeric binder 22, and optionally a solvent 23, a convertor 24, a plasticizer 25 and other additives 26. The radiation sensitive layer 2000 may have a topcoat 30 which may contain additives, such as a convertor 24 and a UV absorber 31. In order to protect the radiation sensitive layer from ambient light and mechanical abuses (scratches/abrasion) the plague can also have a protective layer.

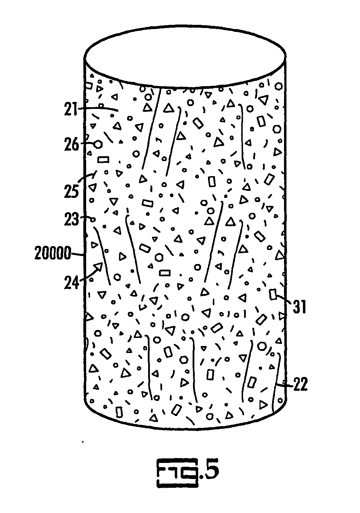

For three dimensional imaging and monitoring dose in three dimensions, a large block can be molded or casted as shown in Figure 5. The block may be comprised of at least one radiation composition thick block 20000, comprised of at least one radiation sensitive composition 21 and polymeric binder 22, and optionally a solvent 23, a convertor 24, a plasticizer, 25 and other additives 26. The block could be cubic rectangular or any other shape of a body part.

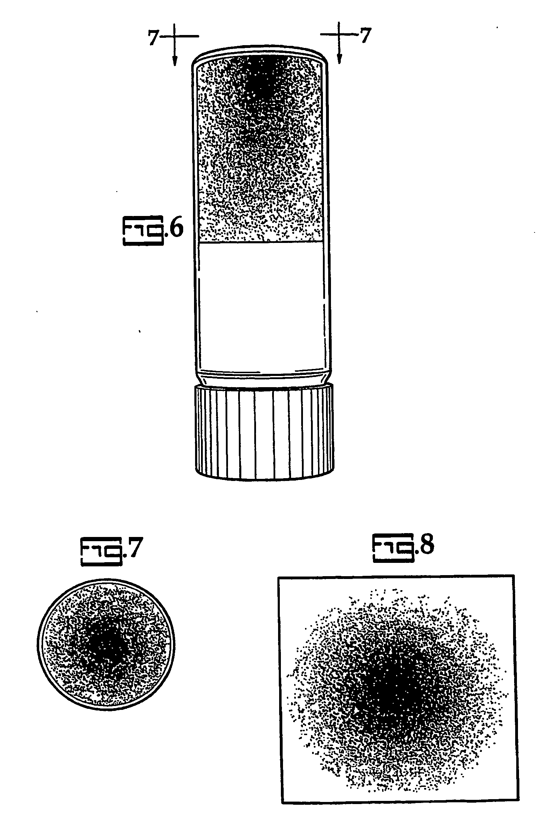

Figure 6 is a representation of a side view of a vial containing a block prepared as per example 18. The sample was irradiated with 10 Gy of 100 KeV X-ray beam which was collimated using metal washers having a hole of 0.7 cm.

Figure 7 is a representation of a top view of the block of Fig. 6 prepared as per example 18. A beam passing through the block can be seen representing exposure. The color intensity decreases from top to bottom.

Figure 8 illustrates an across scanned image of summation of 16 shingle transverse adjacent slices through the center of the cylindrical sample identical to that shown in Figure 7. An optical sealer described in example 23 was used to scan the block.

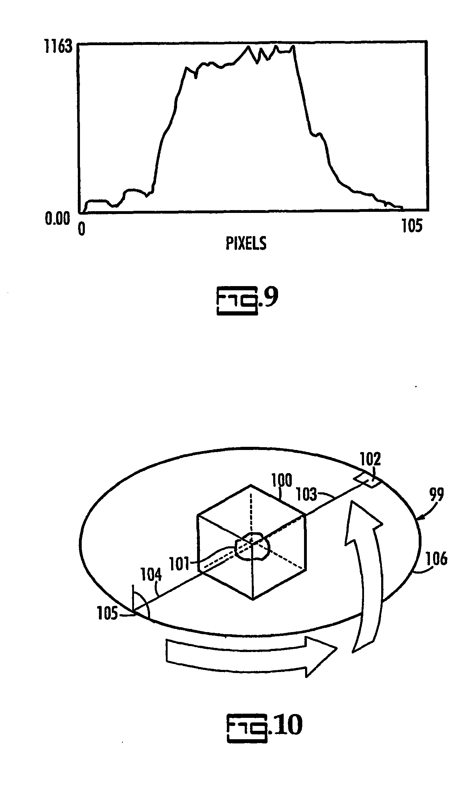

Figure 9 illustrates the density profile and isodose plot across the transverse image of Figure 8.

Figure 10 is a schematic representation of a scanner for use in the present invention. The scanner, generally represented at 99, scans the device, 100. A radiation source, 102, generates a radiation beam, 103, which impinges the item, 100. As the radiation beam transits through the device, 100, the beam intensity is decreased resulting in an attenuated beam, 104. A detector, 105, detects the intensity of the attenuated beam, 104. The source is preferably on a frame, 106, thereby allowing the sample, or radiation source, to be translated and rotated thereby allowing multiple samples to be read. The beam attenuation in each sub-region (often referred to as pixels) of the sample is determined by mathematical reconstructions which are well known in the art and widely used in such techniques as magnetic resonance, CAT-Scans, and the like.

A preferred class of radiation sensitive materials that can be used for making the shaped-articles are diacetylenes having general formula, R'-C=C-C=C-R", where R' and R" are the same or different substituent groups. Though this class of diacetylenes is preferred, other diacetylenes having the following general formulas can also be used:
(1) Higher acetylenes: R'-(C=C)ₙ-R", where n = 3 - 5;
(2) Split di and higher acetylenes: R'-(C=C)ₘ-Z-(C=C)ₚ-R", where Z is any diradical, such as -(CH₂)ₙ- (n = about 1 to about 10) and -C₆H₄-, and m and p are 2 or higher;
(3) Polymeric di and higher acetylenes: [-A-(C=C)ₙ-B-]ₓ, where A and B can be the same or different diradical, such as -(CH₂)ₙ-, -OCONH-(CH₂)ₙ-NHCOO-, and -OCO(CH₂)ₙOCO-, where R' and R" can be the same or different groups and n can be 1 to about 10.

The preferred diacetylenes include those where R' and R" are selected from: (CH₂)_{b}-H; (CH₂)_{b}OH; (CH₂)_{b}-OCONH-R1; (CH₂)_{b}-O-CO-R1; (CH₂)_{b}-COOH; (CH₂)_{b}-COOM; (CH₂)_{b}-NH₂; (CH₂)_{b}-CONHR1; (CH₂)_{b}-CO-O-R1; where b = 1-10, preferably 1-2, and R1 is an aromatic radical,

The preferred diacetylenes are the derivatives of 2,4-hexadiyne, 2,4-hexadiyn-1,6-diol, 3,5-octadiyn-1,8-diol, 4,6-decadiyn-1,10-diol, 5,7-dodecadiyn-1,12-diol and diacetylenic fatty acids, such as tricosa-10,12-diynoic acid (TC), pentacosa-10,12-diynoic acid (PC), their esters and cocrystallized mixtures thereof. The most preferred derivatives of the diacetylenes, e.g. 2,4-hexadiyn-1,6-diol, are the urethane and ester derivatives. The following are some of the preferred derivatives of 2,4-hexadiyn-1,6-diol:
[A] Urethane (-OCONH-) derivatives, R'CH₂-C=C-C=C-CH₂R', including: Hexyl Urethane: 166, R' = OCONH(CH₂)₅ CH₃; Pentyl Urethane: 155, R' = OCONH(CH₂)₄ CH₃; Butyl Urethane: 144, R' = OCONH(CH₂)₃ CH₃; Ethyl Urethane: 122, R' = OCONHCH₂CH₃ and Methyl Urethane: 111, R' = OCONHCH₃;
[B] Ester (-OCO-) derivatives, R"'CH₂-C=C-C=C-CH₂R"', including: Butyl Ester: 144E, R"' = OCO(CH₂)₃CH₃; Ethyl Ester: 122E, R"' = OCOCH₂CH₃; Methyl Ester: 111E, R"' = OCOCH₃;
[C] Asymmetrical diacetylenes including:156: R'-C=C-C=C-R", where R' = CH₂OCONH(CH₂)₅CH₃ and R" = CH₂OCONH(CH₂)₄CH₃];
[D] Cocrystallized mixtures including: Containing 80 weight percent or above of 166 85:15 mixture of 166 and 156 90:10 mixture of 166 and 156 and 4:1 mixture (TP41) of tricosadiynoic acid and pentacosadiynoic acid.

The urethane derivatives can be prepared by reacting diacetylene-diol, e.g., 2,4-hexadiyn-1,6-diol with appropriate isocyanates (e.g. n-hexylisocyanate) in a solvent, such as tetrahydrofuran, using catalysts, such as di-t-butyltin bis(2-ethylhexanoate) and triethylamine as indicated below:

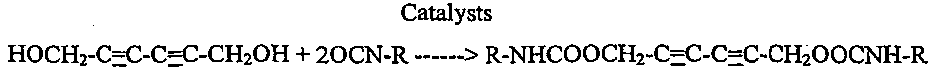

Ester derivatives can be prepared by reacting e.g., 2,4-hexadiyn-1,6-diol with appropriate acid chlorides in a solvent, such as dichloromethane, using a base, such as pyridine as the catalyst; i.e.,

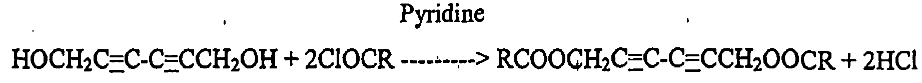

Asymmetrical diacetylenes can be prepared by the Cadiot-Chodkiewicz type reaction methods.

A preferred diacetylene for the inventive device is 166 [R-C=C-C=C-R, where R = -CH₂OCONH(CH₂)₅CH₃]. Diacetylene 166, and closely related diacetylenes are preferable due to high radiation sensitivity, low thermal reactivity, crystallization to an inactive phase from the melt which allows for heat fixability, a readily distinguishable red to blue color change when partially polymerized and heated to near or above the melting point and low toxicity.

Though, individual diacetylenes can be used, it is desirable to alter the reactivity of diacetylenes by cocrystallization. Cocrystallization can be achieved by dissolving two or more ,diacetylenes, preferably conjugated, prior to molding. For example, when TC and, PC are co-crystallized, the resulting cocrystallized diacetylene mixture, such as TP41 (4:1 mixture of TC:PC) has a lower melting point and significantly higher radiation reactivity. The reactivity can also be varied by partial neutralization of diacetylenes having -COOH and -NH₂ functionalities by adding a base such as an amine, NaOH, Ca(OH)2, Mg(OH)2 or an acid such as a carboxylic acid, respectively.

In order to maximize radiation reactivity, 166 can be co-crystallized with other diacetylenes, e.g. 155, 157, 154 and 156, which are described above. Though certain diacetylenes, such as 155, increase the reactivity of 166, the partially polymerized cocrystallized diacetylenes provide a red color upon melting. However, 156 increases the radiation reactivity of 166 and provides a blue color upon melting the partially polymerized diacetylene mixture. 166 can be cocrystallized with different amounts of 156. Preferred is where the amount is 5 - 40 weight percent of 156 to 166, most preferred are 90:10 and 85:15 respective weight ratios of 166:156. As used herein "9010" and "8515" refer to these specific cocrystallized mixtures.

Other asymmetrical derivatives, including different functionalities, e.g., ester as one substituent and urethane as the other, can also be prepared. A procedure for synthesis of a 90:10 mixture of 166 and 16PA is given in U.S. Patent No. 5,420,000. Using the general procedures given in U.S. Patent No. 5,420,000, it is possible to prepare a variety of other asymmetrical derivatives and their mixtures for cocrystallization.

Polymers having diacetylene functionality [e.g., {-R'-(C=C)ₙ-R"-}ₓ, where R' and R" can be the same or different diradical, such as -(CH₂)ₙ-, -OCONH-(CH₂)ₙ-NHCOO- and -OCO(CH₂)ₙOCO- (n = 1 to about 10) in their backbone are also preferred because of the fact that they are polymeric and do not require a binder.

The preferred diacetylenes are those which have a low (below about 150°C) melting point and crystallize rapidly when cooled at a lower temperature, e.g. room temperature.

Another class of preferred diacetylenic compounds is those having an incorporated metal atom and they can be used as in-built convertors. Diacetylenes having functionalities, such as amines, ethers, urethanes and the like can form complexes with inorganic compounds. It is possible to synthesize diacetylenes having an internal convertor, which is covalently bonded, such as boron and mercury, lithium; copper, cadmium, and other metal ions. For example, the -COOH functionality of TC, PC and TP41 can be neutralized with lithium ion and synthesis of R-C=C-C=C-Hg-C=C-C=C-R is reported (M. Steinbach and G. Wegner, Makromol. Chem., 178, 1671 (1977)). The metal atom, such as mercury atom thereby incorporated into the diacetylene can emit short wavelength irradiation upon irradiation with photons and electrons.

The following terminologies are used for defining the reactivity (polymerizability) of a diacetylene. The polymerizable form of a diacetylene(s) is referred to as "active". If a diacetylene is polymerizable with radiation having energy higher than 4 eV, wavelength shorter than 300 nm, then it is referred to as "radiation active". If it is polymerizable upon thermal annealing then it is referred to as "thermally active". A form of diacetylene, which displays little or no polymerization, is referred to as "inactive". If it displays little polymerization with radiation (having energy higher than 4 eV) then it is referred to as "radiation inactive" and if it is significantly nonpolymerizable upon thermal annealing, then it is referred to as "thermally inactive". Diacetylenes having reactivity/polymerizability characteristics in between these definitions are referred to as "moderately active". The most preferred form of diacetylene is one, which is highly radiation reactive and displays little or no thermal reactivity. However, diacetylenes, which are radiation active also usually, have some thermal reactivity. Hence, the preferred form of diacetylene is one, which is highly to moderately radiation active with little or no thermal reactivity. Thermal reactivity can be decreased and radiation reactivity can be increased by cocrystallization and molecular complexation. As an alternative, the shaped-articles can be stored at lower temperature to slow down the thermal reactivity.

Polymerization, and hence the color development, of diacetylene is known to be independent of dose rate and energy of radiation. At a lower dose the color development is linear with dose. Diacetylenes are usually nontoxic. Many diacetylenes show little or no post radiation effect.

Though diacetylenes are the most preferred radiation sensitive materials, other radiation sensitive materials can also be used for making the devices using the procedure and formulations described here. The radiation sensitive materials/formulations described in Imaging Systems, K.I. Jacobson and P.E. Jacobson, John Wiley and Sons, NY 1976 can also be used to make radiation sensitive shaped-articles. In addition to silver halides, e.g., AgCl, AgBr, AgI, silver molybdate, silver titanate, silver mercaptide, silver benzoate, silver oxalate, and mixtures thereof; salts and organic, inorganic and organometallic complexes of metals such as iron, copper, nickel, chromium and transition metals, e.g., mercury oxalate, iron oxalate, iron chloride, potassium dichromate, copper chloride, copper acetate, thallium halides, lead iodide, lithium niobate, and mixtures thereof; aromatic diazo compounds, polycondensates of diazonium salts, the naphthoquinone diazides, photopolymers and photoconductive materials, are also preferred radiation sensitive compositions for making the devices.

Other major class of radiation sensitive materials that can be used in the preshaped radiation sensitive device of the present invention are radiochromic dyes such as new fuschin cyanide, hexahydroxy ethyl violet cyanide and pararose aniline cyanide, leuco crystal violet, leuco malachite green and carbinol dyes such as malachite green base and p-roseaniline base and those described in U.S. Patent Nos. 2,877,169; 3,079,955; and 4,377,751.

These radiochromic dyes and other dyes which change color with change in pH, e.g., with acids can be used in combination with materials which produce acid upon irradiation, e.g., organic halocompounds, such as trichloroethane, ethyltrichloroacetate, chlorinated paraffins and chlorinated polymers. Chlorinated polymers and oligomers (including polymerizable chlorinated oligomers) which can be used for monitoring radiation with pH sensitive dyes include polymers and copolymers of vinyl chloride, vinylidene chloride, epichlorohydrin and similar halogenated monomers. For example, polyvinyl chloride, polyvinylidene chloride, polyepicholorohydrin and their copolymers. A film, plaque and block of halogenated polymers such as polyvinyl chloride, polyvinylidene chloride, polyepichlorohydrin and their copolymers such as polyvinyl chloride, polyvinylidene chloride, polyepichlorohydrin and their copolymers containing a pH sensitive dye, with and without activators and additives such as heat stabilizers, can be used for monitoring radiation. The acid produced can react with the pH sensitive dye and change color. Certain iodinium salts, such as, diphenyliodinium hexafluoroarsenate, and diphenyliodinium chloride produce protonic acids, such as, HCl, HF, HBF₄ and HASF₆ upon irradiation with high energy radiation ( J. Crivello, Chemtech, October 1980, page 624; "The Chemistry of Halides, Pseudohalides, and Azides", S. Patai (Ed.), John Wiley, New York, 1983). We mixed iodinium and sulfonium compounds with some pH dyes including the radiochromic dyes. The sulfonium, iodinium and alike compounds, in which the primary photochemical reaction produces a super acid and this super acid is employed catalytically to generate other acids. Thus the color development is amplified. Such systems, which been described in U.S. Patent No. 6,242,154 and references cited in there. ,

A large number of dyes listed in Table 1 were mixed with a few selected pre-polymer and halo-compound as shown in Example 1 and irradiated with short UV light. Some pH sensitive dyes changed colors.

Table 1: Exemplary dyes include: acid alizarin violet N, acid black 24, acid black 48, acid blue 113, acid blue 120, acid blue 129, acid blue 161, acid blue 25, acid blue 29, acid blue 40, acid blue 41, acid blue 45, acid blue 80, acid blue 93, acid fuschin, acid green 25, acid green 27, acid green 41, acid orange 74, acid red 1, acid red 114, acid red 151, acid red 88, acid violet 17, acid violet 7, acid yellow 99, acridine orange, acridine orange base, acridine orange G, acridine yellow G, acriflavine hydrochloride, alcian blue 8GX, alcian yellow, alizarin, alizarin blue black SN, alizarin complexone, alizarin complexone dihydrate, alizarin red, alizarin violet 3R, alizarin yellow GG, alizarin yellow R, alkali blue 6B, alkali fast green 10GA, alphazurine A, aluminon, aminoacridine hydrochloride, aminoanthraquinone, aminophthalhydrazide, aniline blue, astra blue 6GLL, auramine O, azocarmine, azocarmine B, azure A, azure B, azure B thiocyanate, azure C, basic blue 3, basic blue 41, basic blue 66, basic fuchsin, basic red 29, basic yellow 11, benzo purpurin 4B, biebrich scarlet NA salt, bismarck brown B, bismarck brown Y, blue tetrazolium, bordeaux R, brilliant blue B, brilliant blue G, brilliant cresyl blue ALD, brilliant crocein MOO, brilliant green, brilliant sulphaflavine, brilliant yellow, bromochlorophenol blue, bromocresol green, bromocresol purple, bromophenol blue, bromopyrogallol red, bromothymol blue, bromoxylenol blue, calmagite, carbol fuchsin, carminic acid, carotene, celestine blue, Chicago sky blue, chlorophenol red, chrome azurol S, chromotrope 2B, chromotrope 2R, chromoxane cyanine B, chrysoidin, chrysophenine, cibacron brilliant red 3BA, Congo red, copper(II) phthalocyanine, cresol purple, cresol red, cresol, cresolphthalein, cresolphthalein complexone, crystal violet, curcumin, darrow red, diaminoacridine hemisulfate, diazo red RC, dibromofluorescein, dichlorofluorescein, dichloroindophenol, dicinnamalactone, diethylaminomethyl coumarin; diethyloxacarbocyanine iodide, diethylthiatricarbocyanine iodide, dihydroxy benzenesulfonic acid, dilithium phthalocyanine, dimethyl methylene blue, dimethylglyoxime, dimethylindoaniline, dinitro diphenylamine, diphenylthiocarbazone, direct blue 71, direct green 6, direct red 23, direct red 75, direct red 81, direct violet 51, direct yellow 62, disodium phthalocyanine, disperse blue 14, disperse blue 14, disperse blue 3, disperse orange, disperse orange 11, disperse orange 25, disperse yellow 7, emodin, eosin B, eosin Y, eriochrome black T, eriochrome blue black B, erioglaucine, erythrosin B, ethyl eosin, ethyl orange, ethyl red, ethyl violet, Evans blue, fast black, fast blue B salt, fast blue BB, fast blue RR, fast blue RR salt, fast corinth V salt, fast garnet GBC base, fast green FCF, fast red aluminum salt, fast red violet LB salt, fast violet B salt, fat brown RR fat green GDC salt, flavazin I, fluorescein, fluorexon, gallocyanine, guinea green B, hematoxylin, hydroxy naphthol blue, 1,4-hydroxy-naplithoquinone, indigo, indigo carmine, indoline blue, iron(II) phthalocyanine, janus green B, lacmoid, leishman stain, leuco crystal violet, leucomalachite green, leucoquinizarin, light green SF yellowish, lissamine green B, litmus, luxol fast blue, malachite green base, malachite green hydrochloride, malachite green oxalate, metanill yellow, methyl eosin, methyl green, methyl orange, methyl red, methyl violet 2B, methyl violet B base, methyl yellow, methylene blue, methylene green, methylene violet 3RAX, methylesculetin, methylthymol blue, mordant blue 9, mordant brown 24, mordant brown 4, mordant orange, mordant orange 1, mordant orange 6, mordant red 19, mordant yellow 10, morin hydrate, murexide, naphthochrome green, naphthol AS, naphthol blue black, naphthol green B, naphthol yellow, naphtholbenzein, naphtholbenzene, naphtholphthalein, neutral red, new coccine, new fuchsin, new methylene blue N, nigrosin, Nile blue A, Nile blue chloride, nitrazine yellow, nitro red, nitro-phenanthroline, nitrophenol-2, nitrophenol-3, nitrophenol-4, nitrophenylazo-resorcinol, nuclear fast red, oil blue N, oil red EGN, oil red O, orange G, orange II, palatine chrome black 6BN, palatine fast yellow BLN, pararosaniline acetate, pararosaniline base, pararosaniline chloride, patent blue VF, pentamethoxytriphenylmethanol, phenanthroline, phenazine, phenol red, phenolphthalein, phenolphthalein diphosphate, phenothiazine, phenylazoaniline, phenylazodiphenylamine, phenylazoformic acid, phenylazophenol, phloxine B, phthalocynine, pinacyanol chloride, plasmocorinth, ponceau S, primuline, procion red MX-5B, procion yellow H-E3G, prussian blue, purpurin, pyridlazo naphthol, pyridylazoresorcinol sodium salt, pyrocatechol violet, pyrogallol red, pyronin B, quinaldine red, quinizarin, quinoline yellow, reactive black 5, reactive blue 15, reactive blue 2, reactive blue 4, reactive orange 16, resazurin, resorcin crystal violet, rhodamine B, rhodamine B base, rhodamine GG, rhodamine S, rhodanine, rosalic acid, rose bengal, rose bengal iactone, safranine O, solvent blue 35, solvent blue 59, solvent green 3, styryl 7, sudan black B, sudan orange, G, sudan red 7B, sulfobromophthalein sodium salt, sulforhodamine B, tartrazine, tetrabromophenol blue, tetrabromo phenolphthalein, tetrabromo phenolphthalein, tetraiodo phenolphthalein, tetraphenyl-butadiene, tetrazolium violet, thiazol yellow G, thioflavin S, thioflavin T, thionin, thymol blue, thymolphthalein, thymolphthalein monophosphate, thymolphthalein monophosphate, toluidine blue O, triphenylmethyl bromide, tropaelin O, trypan blue, turmeric, vanillin azine, variamine blue RT salt, variamine blue RT salt, victoria blue B, victoria blue B, victoria pure blue BO, wright, stain, xilidine ponceau 2R,, xylenol blue, and xylenol orange.

Some of these dyes are fluorescence dyes and some of them changed their fluorescence upon irradiation.

Transparent radiation sensitive shaped-articles are the most preferred. If the shaped-article is opaque, semi transparent or translucent, it is desirable that it becomes substantially transparent after processing, i.e., heating. A radiation sensitive shaped-article, which is opaque, can also be used for certain applications such as radiation dosimetry. Transparency for 3D dosimetry is required only if optical scanning is used. For other techniques, such as MRI, it is not necessary to have transparency or uniform thickness. Several techniques, such as grinding the radiation sensitive compositions into very fine particles and crystallizing into very fine particles by techniques such as rapid quenching can be used to provide the required transparency. A transparent radiation sensitive shaped-article will provide a clear image with high resolution for an optical scanning and monitoring system. For monitoring a color change in reflectance mode, transparency is not required. As diacetylenes polymerize only in the solid (crystalline) state, they must be in the crystalline state in the binder at least at the time of irradiation. For clarity of the radiation sensitive shaped-article, the binder for the diacetylene should be highly transparent. However, in order to avoid scattering and hence opacity, the preferred crystal size of the diacetylene is smaller than 300 nm, preferably less than 100 nm (1 micron). In order to obtain a transparent radiation sensitive shaped-article, the refractive indices of the radiation sensitive material and that of the binder should also be as close as possible. The refractive index of organic material's is usually low and within a narrow range. Amorphous polymers are desirable but semi-crystalline polymers can be used as binders if they provide a significantly transparent coating. A crystalline polymer can be made amorphous by cross-linking. Binders which wet the surface of the radiation sensitive materials such as diacetylene crystals will also provide higher transparency. A wetting agent or surfactant can increase the wetting of the crystals by the binder. A binder, which is transparent and has a refractive index close to that of diacetylene and/or preferably wets the diacetylene crystal surface is desirable. A shaped-article is considered transparent if over about 25% of the incident light is transmitted through the shaped-article. A shaped-article is considered opaque if more than about 75% of the light is absorbed, reflected or scattered rather than being transmitted through. A colored shaped-article can also be transparent at one wavelength of incident radiation if that light is not absorbed or partially absorbed. However, the same colored shaped-article can appear opaque to a different wavelength of incident radiation, if its color absorbs the incident radiation.

Transparency in the shaped-articles such as coating, film, plaque and block can be achieved by making solid solution of radiation sensitive material and the binder. In order to polymerize diacetylenes, they must crystallize into particles finer than the wavelength of the light used for scanning. As an alternative, the same goal can be achieved by either using diacetylenes which are solid at the temperature of irradiation and liquid either at room temperature or temperature of scanning. Such goal can also be achieved either by using liquid diacetylenes or solution of diacetylenes. Transparency can also be achieved by grinding crystalline diacetylenes into fine particles below the wavelength of light, dispersing in a proper pre-polymer followed by its polymerization. We grinded diacetylene 166 in very fine particles in glycerol using a grinding mill of Primiermills, Reading, PA mixed with poly(1,6-hexamethylene diisocyanate), Bayer Corp., Pittsburgh, PA) followed by polymerization using triethylamine as a catalyst.

The term "convertor(s)" is used for any material, substance or mixture, which can be complexed or doped with other substances, which when irradiated with high energy radiations, both ionizing and nonionizing, produces relatively lower energy radiation, either of the same or different type, via any process including scattering, attenuation, fluorescence, phosphorescence, and conversion. Inorganic and organometallic compounds are preferred as convertors because they have the ability to transfer/convert high-energy radiation into lower energy radiation via many processes, such as scattering, absorbance, fluorescence, and phosphorescence. The selection of a convertor depends upon the type of radiation to be monitored and its energy. For example, lead and barium salts are good convertors for monitoring X-ray radiation and boron, lithium salts are good convertors for measuring thermal neutrons.

When high-energy radiation strikes a metal, secondary electrons and other radiations of longer wavelengths are emitted. The emission of these secondary radiations become greater in materials with a high atomic number. Barium salts are especially preferred because they are nontoxic. Elements having high atomic number (Z), such as lead, are also preferred. Other convertors include alloys, salts, and free metals of zinc, tin, silver, tungsten, molybdenum, platinum, gold, copper, iodine, and bromine.

The resulting image can be amplified by incorporating convertor materials into the radiation sensitive mixture, under coat, topcoat, and preferably into all these. The convertors will absorb high energy X-ray, radiation, electrons, and neutrons and convert the absorbed radiation into secondary low energy ionizing radiation. These secondary low energy ionizing radiations and nuclear particles, such as alpha particles emitted by the convertor can initiate reaction in the radiation sensitive materials. The secondary radiation, irrespective of its source can be absorbed by the convertor materials and emit tertiary ionizing radiation which in turn can also initiate a reaction in the radiation sensitive materials. When the secondary radiations are electrons, use of electroluminescence materials as convertors can amplify the image.

The image of thin shaped-articles e.g., film, can be further amplified by placing it into intimate contact with one or two screens made from convertor materials. The screens in their simplest form can be a plain metal foil and/or coated with a radioluminescence, electron luminescence or fluorescence phosphor material, which emits radiation of usually lower energy. The X-ray image can be amplified by using phosphor materials, which emit energy higher than 4 eV as screen materials. Phosphor materials, which emit long wavelength UV light, can be made to emit higher energy radiation by appropriate dopants, quantity of dopants and doping processes. An appropriate voltage can also be applied to the screens to produce secondary electrons, which in turn can also initiate reaction in the radiation sensitive materials, thereby also amplifying the image.

Any material, which is an organic, inorganic and/or organometallic compound, which emits radiation of wavelength lower than 300 nm, (energy higher than 4 eV) including those emitted by fluorescence and phosphorescence, upon irradiation with high energy radiation can be used as a convertor for the undercoat, radiation sensitive coat, top coat and the screens. In order to maximize the sensitivity of the film, the selection of a proper convertor is required. A convertor which has a high ability to absorb high-energy radiation and emit high intensity radiation of significantly lower energy, but higher than 4 eV, is preferred.

Substances commonly known as cathode/electro luminescence materials, i.e., are materials which when contacted with electrons emit lower energy radiation. Electroluminescence phosphors, such as hafnium pyrophosphate and those substituted with zirconium, germanium and silicon, which emit UV light or can me made to emit UV light by doping are preferred phosphors. These materials can also be used as convertors if they emit radiation having energy higher than 4 eV, because the secondary electrons can induce cathode luminescence materials to emit UV and X-ray radiation, which in turn can initiate the polymerization of diacetylenes.

A material which emits radiation having a wavelength shorter than 1 nm can be used as a convertor. Preferred are those, which emit UV radiation in the range of 300 to 1 nm. UV radiation is rapidly absorbed by the diacetylene functionality and causes their polymerization. Hence, a preferred convertor should emit radiation of energy between 300 and 100 nm. Materials commonly known as phosphors include those from the II-VII Periodic Table group phosphors (e.g. ZnS, ZnCdS) and a rare earth phosphor (e.g. Gd₂O₂S, Y₂O₂S, YTaO₄ or activated YTaO₄) and three elemental oxide phosphors (e.g. CaWO₃, ZnSiO₄). Convertors, such as barium lead sulfate, naphthalene-sodium iodide doped with Tl, ZrP₂O₇ (zirconium phosphate), which can emit UV light, can be used. Properly doped phosphors, such as barium fluorochloride and lanthanum oxybromide, terbium activated rare earth oxysulfide (X₂O₂S where X is gadolinium, lanthanum or yttrium), GdOS:Tb(III), LaOS:Tb(III), LaOBr:Tb(III), LaOBr:Tm(III), Ba(FCl)₂:Eu(II), SrB₄O₇:Eu (strontium europium borates), BaSi₂O₅:Pb (barium silicate), (CeBa)MgAl₁₁O₁₉ (cerium, barium-magnesium aluminate), strontium pyrophosphate activated with europium, and phosphates of zirconium, germanium, silicon and hafnium can emit short wavelength UV light. The preferred phosphor is the one, which emits short wavelength UV light (e.g., 300 - 50 nm).

For monitoring neutrons, compounds having a high neutron cross-section are preferred convertors. The neutron cross-section for boron decreases as the energy of neutrons increases. Naturally occurring boron compounds have about 20% boron-10. Amines form a complex with boric acid. Boric acid (BA) is nontoxic and inexpensive. Shaped-articles containing boron and lithium, especially boron, as a convertor can be used for monitoring thermal neutrons and boron-neutron capture therapy. Elements having high neutron cross-section and emitting electrons and gamma rays, e.g., gadolinium can also be used as a converter for neutrons.

Instead of using color changing materials such as diacetylenes, one can also use materials which emit light, such as UV, visible and IR when irradiated with high energy radiation. The emission of light could be due to a direct or indirect interaction of the high energy radiation. For example, electron, protons, alpha particles, and lower energy photons can interact with materials which, emit UV, visible or IR light. The materials which emit lower energy radiation are known as phosphorescence, scintillation, fluorescence and thermoluminescence. The light emitted by these materials can be detected with photo-detectors such as phototubes, photo-multiplying tubes, CCD and other cameras. When phosphorescence, scintillation, fluorescence, thermoluminescence and similar light emitting materials are used, instead of the color changing materials, the scanner will not need a light source. A three dimensional glow will be created in the path of the radiation by the light emitted by phosphorescence, scintillation, fluorescence and thermoluminescence materials. These materials can be dispersed or dissolved in transparent solid plastic block made from materials such as polystyrene and polymethylmethacrylate. If thermoluminescence type materials are used, they would require heating at a higher temperature for the light to be emitted.

Scintillation materials are ideal for this application. Scintillation materials are widely used for detecting ionizing radiation. Scintillation materials emit short light pulses after excitation by the passage of charged particles or by photons of high energy.

Scintillating material can be organic (solid crystals, plastics, i.e. synthetic polymers, or organic liquids such as toluene, xylene and alkylated benzene, fluorobenzene and p-dioxane), inorganic (crystals or glasses) or gas. Examples of organic crystals are anthracene (C₁₄H₁₀), trans-stilbene (C₁₄H₁₂), or naphthalene (C₁₀ H₈ ). Among plastics, two- or three-component scintillators are common, with a solid solvent, doped with aromatic compounds or with wavelength shifters; polysterene and polyvinyltuolene are most commonly used. Inorganic crystals include Na(T1), CsI(T1), and BaF₂; high-Z crystals make good high-energy physics scintillators. As gaseous or liquid scintillators one uses Xe, Kr, Ar, He, or Ne.

In organic scintillators, ionizing particles provoke an excitation of molecular levels, which causes light in the UV region to be emitted. Added wavelength-shifting molecules absorb the UV photons and reemit visible light, in the blue region (around 400 nm wavelength). Inorganic materials are frequently doped with other materials acting as an activator centre by the capture of holes or electrons generated by ionization.

Organic, Scintillators (plastics, liquids) on the contrary are composed of aromatic hydrocarbons. Plastic Scintillators are non-fluid solutions consisting of fluorescent organic compounds dissolved in a solidified polymer matrix. Liquid Scintillators are fluid solutions with similar fluorescent organic compounds.

Plastic and Liquid Scintillators can be loaded with elements such as Boron, Lithium and Gadolinium for increased thermal neutron sensitivity and Lead or Tin (the latter only in Liquid Scintillators) for increased X-ray and Gamma-ray sensitivity.

System can be used to monitor the dose distribution of electrons, muons; protons, alpha particles, x-ray/gamma ray, neutrons and atomic nuclei. The energy that can be detected include thermal neutrons (~0.5 V) to high energy radiation having energy 50 MeV.

Low energy neutrons are detected by loading a scintillator with elements that have a high neutron capture cross section. When a neutron is captured, various charged particles are released and detected by the scintillator. The most common loading elements are ⁶Li, ¹⁰B, and Gd. Scintillators loaded with these elements are listed below. The Q value of a reaction is the excess energy that is imparted to the charged particles. Increased detection efficiency is achieved by moderating the incident neutrons to thermal energies and using one of the capture reactions.

Although any solid substrate having a smooth surface can be used for coating radiation sensitive shaping formulation and making film, preferred substrates are flexible and transparent plastic film, and natural (cellulose) and synthetic (e.g., spun bonded polyolefins, e.g., Tyvek^{R}) papers. Plastic films, such as polyethylene, polypropylene, polyvinylchloride, polyvinylidene, polyepichlorohydrene, chlorinated polymers and oligomers, polymethylmethacrylate, polyurethanes, nylons, polyesters, polycarbonates, polyvinylacetate, cellophane and esters of cellulose can be used as the transparent substrate. Metal foils, such as aluminum can also be used. The most preferred substrates are 5 - 300 microns thick films of polyethylene terephthalate. Self-supporting film, plaque and block do not require substrate.

Strong adhesion of the radiation sensitive' layer with the substrate film is required. If the coating does not adhere to the base film, it usually flakes off. In order to increase the adhesion of the coating to the substrate, a thin coating, known as a subcoating, undercoat or substratum, which has ability to bond with substrate, such as polyester base film and the radiation sensitive coating, is applied on the polyester film. The nature/composition of the substratum will depend upon the nature/composition of the binder.

A large number of pre-polymer systems can be used for making the radiation sensitive shaped-articles. In the two component systems, polyepoxide, polyurea, polycarbonate, polyester, polysilicones and polyurethane are preferred. The oligomeric pre-polymer systems, such as diepoxide, diamines, diols and diisocyanates, are available commercially from several suppliers such as Dow, Monsanto, Witco, Union Carbide and several small companies. Proper molecular weight and formulation can be selected so that diacetylenes dissolve in the pre-polymers at higher temperatures and precipitate/crystallize at room temperature. Non-diacetylenic radiation sensitive materials would not require crystallization.

If one of the pre-polymers is tri-functional, a crosslinked (thermoset) shaped-article can be obtained. It is also possible to cast shaped-articles by mixing a radiation sensitive material/system with a thermoplastic in molten state and injecting/pouring in to a mold of the shaped-article. The binder polymers can be homopolymers, copolymers, graft-copolymers, block copolymers, polymeric alloys and mixtures thereof.

A large number of monomers and oligomers are used to make polymers. They include unsaturated monomers such as olefins, vinyls, acrylates, and methacrylates such as methylmethacrylate, methylacrylate, styrene, acrylic acid, butane diol 1,4-dimethacrylate, diethylene glycol diacrylate, diethylene glycol dimethacrylate, ethylene glycol dimethacrylate, hexanediol-1,6-dimethacrylate, methylstyrene-alpha-pentaerylthriol triacrylate, polyethylene glycol dimethacrylate, polypropylene glycol dimethacrylate, triethylene glycol dimethacrylate, 4-(Vinyloxy) butyl benzoate, bis[4-(vinyloxy)butyl] adipate, bis[4-(vinyloxy)butyl] succinate, 4-(vinyloxymethyl)cyclohexylmethyl, bis[4-(vinyloxy)butyl] isophthalate, bis[4-(vinyloxymethyl)cyclohexylmethyl], tris[4-(vinyloxy)butyl] trimellitate, 4-(vinyloxy)butyl stearate, bis[4-(vinyloxy)butyl] hexanediylbiscarbamate, bis[[4-[(vinyloxy)methyl]cyclohexyl]methyl], bis[[4-[(vinyloxy)methyl]cyclohexy]methyl], and bis[4-(vinyloxy)butyl] (4-methyl-1,3-phenylene). These and other monomers and oligomers that can be polymerized by radical and cationic polymerization using peroxide and ultraviolet light are described in "Chemistry and Technology of UV and EB Formulations for Coatings, Inks, & Paints" by Oldring, P.K.T., Ed.; SITA Technology: London. A large number of monomers, oligomers and polymers commercially available are listed in catalogs such as Aldrich Chemical, Milwaukee, WI.

We dissolved radiation sensitive materials such as radioactive dyes and diacetylenes in monomers and oligomers such as butane-1,4-diol dimethacrylate, diethylene glycol diacrylate, diethylene glycol dimethacrylate, ethylene glycol dimethacrylate, hexane-1,6-diol dimethacrylate, polyethylene glycol diacrylate, pentaerythrol triacrylate, polypropylene glycol diacrylate, polypropylene glycol dimethacrylate, triethylene glycol dimethacrylate and diallyldiglycolcarbonate and polymerized using catalysts such as benzoyl peroxide and promotors such as N,N-Dimethyl-p- toluidine and with long wavelength UV light using benzoin methyl ether as a catalyst. The resultant shaped-articles were irradiated with X-ray. The shaped-articles developed color. The preferred monomers and oligomers are olefins, vinyl and acrylates. The most preferred monomers and oligomers are methylmethacrylate and polyethylene glycol dimethacrylate.

Diacetylene such as 166, 4BCMU, TCME, PCME, PC, and TC were dissolved in molten polymers such as polybutylene, polybutylmethacrylate, polybutylmethacrylate/isobutylmethacrylate, polyethylene, poly(ethylene-co-acrylic acid), poly(ethylmethacrylate), polyethylene/vinylacetate, poly(isobutylmethacrylate), polyvinylbutyral, polyvinylbutyral, polyvinylchloride, polyvinylstearate, poly(ethylene-co-acrylic acid), poly(ethylene-co-methacrylic acid), polybutadiene, polyvinylacetate, poly(ethyelene-co-butylacrylate-co-carbon monoxide), poly(o-cresyl glycidyl ether)-formaldehyde, poly(ethyelene-co-1-butene), poly(ethyelene-co-methylacrylate), polyethylene-co-vinylacetate-co-carbon monoxide), polyhexamethyleneadipate, and polyhexamethylenevinylene. Molten mixtures were cooled to room temperature. Depending upon the polymer and diacetylene, opaque, transluscent and transparent shaped objects were obtained. Molten mixtures were casted in to shaped-articles such as thin film, plaque and blocks and exposed to X-ray. Most of the shaped-articles developed color upon irradiation. Other radiation sensitive materials can be used instead of diacetylenes. Most of the melt processible polymers can also be used for radiation sensitive materials other than diacetylenes. Preferred polymers for melt processing are those which provide transparent shaped-articles. The most preferred by polymethylmethacrylate, polystyrene, polyester, poly(ethylene-co-acrylic acid) and polyvinylacetate.

A variety of solvents and plasticizer can also be added in formulation for proper crystallization of diacetylenes or dissolution of radiation sensitive dyes and to adjust the, temperature of clarity of the block and plasticization of the binders. Use of solvent and plasticizer will depend upon several factors such as nature and concentration of radiation sensitive materials, binders, and additives. We explored the use of several high boiling solvents such as butoxy-2-ethylstearate, butyrolactone, diethyl fumarate, dimethyl maleate, dimethylcarbonate, dioctyl phthalate, ethylene glycol dimethyl ether ethyl salicylate, polyethylene glycol dimethylether, propylene carbonate, triacetin, benzyl ether, dodecyl-1,2-methyl pyrrolidone, ethoxyethylacetate, ethylene glycol diacetate, ethyltrichloroacetate, methylpyrrolidone, methyl sulfoxide, polyethylene glycols of different molecular weight, dimethylformamide, cyclohexane, p-dioxane, tetrahydrofuran and p-xylene. Preferred solvents are high boiling solvents, plasticizers and liquid oligomers. The most preferred solvents are dioctylphthalate, ethylene glycol diacetate and ethyl salicylate.

One special class of binders that can mainly be used to make the dosimeter for measuring dose in three dimensions are water soluble polymers which have the capability of forming gels at room temperature. They include natural and synthetic polymers such as gelatin, agar and polyacrylamide. Inorganic materials normally known as *sol-gel* materials, can also be used. Gelling could be due to chemical crosslinking as well. In this type of systems, preferably everything is water soluble, as water is one of the major components of the solvent. Other non-aqueous co-solvents such as ethanol can be added. We made a gel system using gelatin as a binder, leuco malachite green as indicator, trichloroethanol as an activator and water:ethanol mixture as a solvent. The mixture was made essentially colorless by adding a required amount of ammonia and cooling to room temperature to make the gel. The gel developed light green color when irradiated 50 Gy of 100 KeV X-ray.

The gel does not have to be aqueous. We demonstrated the concept with three non-aqueous gels. (1) A transparent candle gel purchased commercially from The Chemistry Store, Pompano Beach, FL, which is based on U.S. Patent No. 5,879,694. This gel uses mineral oil as a solvent. (2) a polymer latex, purchased from Liquid Plastic, Limit MFG Corp., Richardson, TX, which forms gel when heated and cooled room temperature and (3) a silicone polymer made by mixing two components.

Both aqueous and non aqueous gel systems can be used for determination of the dose distribution in three dimensions. In non-aqueous gels, a solvent is not required, however, a solvent can be used.

A topcoat of about 0.5 - 2 microns, also known as a supercoat, is usually applied to make the coating resistant to abrasion. The topcoat can contain a converter, such as lead iodide and sodium iodide, which is capable of producing radiation of lower energy when irradiated with the high-energy radiation thereby enhancing the image. Although the polymers in the radiation sensitive coat, sub-coat, and topcoat can be different, the convertor material can be the same or different depending upon the binder used. As the film does not require wet processing, any scratch resistant polymers can also be used as the topcoat. The protective coat can also contain a convertor material, a low molecular weight UV absorbing compound, and other additives, such as an antistatic compound. If the topcoat contains additives, such as a convertor, a scratch resistant protective coat can be applied on the topcoat. This topcoat can be polyurethanes, polyepoxy, and polyacrylics, which provide a hard protective coat. In case of plaque and block a container can be considered as a top coat.

Ionic and nonionic surface-active agents can be used as surfactants. Pluronic^{R}, Gafac^{R} RS-710, sodium dodecyl sulfate, cetyltrimethyl ammonium chloride, ethoxylated para-octylphenol, 2-ethyl-hexyl alcohol ethoxylate, lecithin, polyethylene glycol and PEG-dodecylether are some examples of surfactants, which can be used to make radiation sensitive shaped-articles. Preferred concentration of surfactant in the mixture is 0.01 to 5%, most preferred is 0.1-2%.

The temperature of cooling the moldable mixture will depend upon several factors such as the nature of radiation sensitive materials, their solubility in binders, nature of binder, other additives such as convertors, surfactants and catalyst. The preferred temperature for cooling the moldable mixture is room temperature.

The blocks can be irradiated alone, in a plastic, glass or other transparent containers, including heat shrinkable plastic containers. Blocks can also be spray coated to prevent migration of chemicals on the surface. If required, the block can be kept in a transparent container. The preferred transparent container is glass or plastic. The block can be spray coated with a polymer containing a UV absorber.

The radiation sensitive shaped-articles can be used for monitoring radiation dose. They can also be used for a variety of applications, such as a dosimeter for radiation, monitoring processes, such as radiation therapy, curing of coating and cross-linking of plastics, for recording images and information, as microfilm and radiography film, and imaging radiation sources and monitoring dose in three dimensions. In each of the above utility applications, there are a number of other applications, for example, for radiation therapy, the film can be used for verification, imaging, field size coincidence, as a transmission check, measuring portal radiation and beam data acquisition (depth dose, field flatness, beam symmetry and dosimetry), mapping/calibration of brackytherapy and three dimensional dosimetry. The shaped-articles can also be used for monitoring UV exposure, e.g., by sunbathers. The UV exposure can be estimated from a reference color chart.

Radiation sensitive formulations such as diacetylenes 166 and their cocrystallized mixtures, which when exposed to UV light, develop a color and when heated become inactive to radiation can be used for making a high speed printing paper and labels. A paper coated with such compositions can be printed using a mask at extremely high speed. Printing can be done with a UV lamp using a negative/mask or using a UV laser. When the paper is heated, e.g., by passing between heated rollers, it will get fixed and become inactive to radiation. The printing papers can be prepared by coating them with the radiation sensitive composition using the conventional and those procedures disclosed herein. Desired colors can be obtained by mixing proper radiation sensitive materials in proper proportions. The radiation devices can be fixed by processes disclosed in U.S. Patent No. 5,420,000.

Medical supplies are sterilized with gamma ray, X-ray and electrons. The radiation dose required for the sterilization varies from a few tens of kilo Gy to a few hundred kilo Gy. The shelf life of whole blood and that of a wide variety of foods is extended by irradiating with low dosage (0.01-1 kilo Gy) gamma rays and electrons. Many coatings are cured by UV light and UV curable inks are widely used to avoid air pollution. The radiation dose for all these applications can be monitored using radiation sensitive formulations and processes disclosed herein.

The preferred temperature range of irradiation is between -40°C and 60°C. The most preferred temperatures are 4°C and room temperature (25°C).

For monitoring radiation dose in three dimensions for processes such as radiation therapy and calibration of sources, one needs a large block of radiation sensitive material. Irradiation of such a block can be used for mimicking radiation therapy and similar treatments. A large number of pre-polymers and polymers, and processes described earlier can be used. Any desired shaped block can be obtained by using appropriately shaped mold. For example, for radiation therapy of a hand, a radiation sensitive block in shape of hand can be molded or casted and irradiated from different angles.

Once the block is irradiated it can be scanned with an appropriate scanning technique such as MRI and optical. Scan data can be processed and used for planning radiation therapy treatment.

An image produced in the block by the irradiation can be scanned with MRI and optical techniques. An optical scanner may incorporate a laser, photodiode detectors, and a rotating platform for the gel or alternatively a lamp, color filter, light diffuser, rotating platform for the block and a digital camera. Data can be acquired for each incremental rotation of the platform. Using the set of optical-density projections obtained, a cross-sectional image of the radiation field is then reconstructed. Dose can be determined from calibration data and optical density measurement.

Effect due to scattering and change in refractive index can be minimized by scanning the sample before and after irradiation followed by subtracting the scanned data of the un-irradiated sample from that of the irradiated sample. Thus use of liquid having matching refractive index can be eliminated.

The radiation sensitive shaped-articles offer many major advantages over other similar devices. They are simple devices such as just a piece of plastic. They will be an inexpensive. Radiation sources can be imaged in three dimensions. They will be tissue equivalent and hence no corrections will be required. They will be a self-developing and instant device. The images can be fixed for archiving the results. They can be used as a personnel and area dosimeter. They will be highly sensitive. They will be able to monitor very low dose ~1 mGy. Dose can be determined with an accuracy better than 5% with a spectrophotometer or colorimeter. They can be used over a wide dose range (1 mGy to 100,000 Gy). The color development of the device will be essentially independent of the energy and the dose rate. They will monitor all kinds of high-energy radiations, such as UV, X-ray, gamma ray, protons, electrons, alpha particles and neutrons. They use no toxic chemicals or toxic chemicals can be encased. They will be unaffected by ambient conditions, e.g., temperature and humidity. They can be used for three-dimensional dosimetry for radiation therapy planning.

The device is preferably a pre-determined shape depending on the application. If three-dimensional dosimetry is not necessary the radiation sensitive material can be in the form of a film, which is thin and planar, or a coating on a shaped, or planar, substrate. If three-dimensional dosimetry is'desired the device can be in the shape of a fiber, which is defined herein as having a high aspect ratio of greater than about 20:1, a rod, which is defined herein as having an intermediate aspect ratio of about 5:1 to below 20:1 or a block, which is defined herein as having a low aspect ratio of less than 5:1. The aspect ratio is defined as the ratio of length to a diameter of a circle having the same surface area as a cross-section of the device. The device can have a regular geometric pattern, defined herein as a regular geometrical shapes formed by the area enclosed by arcs or by multiple intersecting planes such as trigonal pyramidal, rectangular, rectangular pyramidal, etc. The device may be in the form of an irregular geometric pattern which have no gross defined shape. Irregular geometric patterns include biological shapes such as hands, feet, etc. or shapes which are specifically formed to have varying thickness to accommodate a sample or to provide calibration areas and the like.

In addition to the above advantages the plaque and block have major desirable features for monitoring dose in three dimensions. The can be a solid self-standing matrix. They can have a highly transparent matrix with low refractive index. The image representing dose is in color. The image is transparent. The image is stable. The image has good color intensity within about 1 Gy. The image develops almost instantly., The image is scannable with simple scanners, e.g., optical scanner. The device is energy independent and dose rate independent. There are no post radiation effects. The image is linear with dose. All materials are non-toxic. The device has a long shelf life and long archival life. There is minimal effect of temperature of irradiation. Multi-exposure can be given and evaluations of cumulative doses can be made. The devices have high resolution. The can be easily manufactured at low cost. There is no effect of ambient conditions such as oxygen, light and humidity before and after imaging. The devices are environmentally safe to dispose of. The image is fixable and once fixed the image can be stored indefinitely.

### EXAMPLES

The following Examples are illustrative of carrying out the claimed invention. All experiments on radical or cationic polymerization of monomers and oligomers were carried out under an oxygen-free environment (i.e., under an atmosphere of nitrogen).

### EXAMPLE 1. A pH dye as indicator, a halo compound as activator and use of two reactants to make the binder.

The system comprises:
Binder: Poly(propylene glycol), MW 1000 and poly(isophorone diisocyanate) MW 1550 (MW = average molecular weight).
Activator: Trichloroethane
Indicator: Leuco malachite green
Catalyst: A tin compound, (Metacure T-9 of Air Products, Allentown, PA)
Procedure: 15g of the poly(propylene glycol) with a MW of about 1000 was mixed with a leuco malachite green solution comprising about 3 grams of dye in trichloroethane. To the mixture were added 10g of poly(isophorone diisocyanate) MW 1550 and 10 drops of the catalyst followed by mixing. The mixture became solid in about ten minutes. When irradiated with 50 Gy of 100 KVP X-ray the mixture turned light green.

### EXAMPLE 2. pH sensitive dyes as indicators, halocarbons as activators and binder from monomer and polymer mixture.

The system comprises:
Binder: HH772 Acrylic Casting and Embedding Kit (Polysciences, Warrington, PA 18976)
Indicator: Leuco malachite green
Activator: Trichloroethane (TCE)
Procedure: One gram of leuco malachite green was dissolved in 20g of HH772 casting and embedding kit which was a mixture 30% polymethylmethacrylate dissolved in 70% methylmethacrylate monomer. To the mixture was added 1.2g of 5% benzoyl peroxide in dibutyl phthalate, 5ml of trichloroethane and 2 drops of a promotor (N,N-dimethyl toluidine) followed by mixing. The mixture was very faint green and became solid in about 10 minutes at RT. The sample was irradiated with 50 Gy of 100 KVP X-ray. The irradiated portion turned green.

A large number of dyes listed in table 1 and some reduced dyes were also evaluated. Many dyes changed or developed colors, e.g., acid sensitive dyes such as pentamethoxytriphenylmethanol (PTM) changed from colorless to red, radiochromic dyes such as hexahydroxy ethyl violet changed from colorless to violet, pararoseaniline cyanide changed from colorless to red, triphenyl tetrazolium chloride changed from colorless to red, carbinol (base) dyes such as malachite green base changed from colorless to green and leuco dyes such as leuco crystal violet changed from colorless to violet, when irradiated.

The effects of binder, solvent, amines and temperature of curing were also studied with selected dyes such as leuco crystal violet.

Other halocompounds such as ethyl trichloroacetate, heptachloropropane, ethyltrichloroacetate, chloroacetic acid, chloropropionic acid, hexachlorocyclohexane, methyltrichloroacetimidate, trichloroacetic acid, trichloroacetamide, trichloro ethanol, trichloro methyl benzyl acetate, trichloro methyl propanol hydrate, trichloro propane and commercially available chlorinated polymers such as Paroil 150A, Paroil 152, Paroil 170, Paroil 1061, and Paroil 1650 of Dover chemical, Dover, OH were also studied. Generally, chloro compounds provided better stability than bromo and iodo compounds.

### EXAMPLE 3. Use of liquid diacetylene as an indicator and two reactants to make the binder.

The system comprises:
Binder: Poly(ethylene glycol) MW 400 and 1,6-hexamethylene diisocyanate (Bayer Corp., Pittsburgh, PA)
Indicator: Methyltricosa-10,12-diynoate (TCME), mp 18-19°C
Catalyst: Triethylamine
Procedure: A mixture of 30.5g of poly(ethylene glycol) and 15.5g 1,6-hexamethylene diisocyanate was prepared in a jar. To the mixture was added while stirring 1.5g triethylamine and 4.5g TCME. The mixture was heated slowly at 70°C and then cool to room temperature. The mixture became transparent solid within 30 minutes. The solid became opaque in a refrigerator (~7°C) and in a freezer (~-20°C). The sample was irradiated with 5 Gy of 100 KVP X-ray on an ice block. The irradiated portion turned blue. Upon bring to RT, the sample became clear and the irradiated portion changed to red.

A silicon polymeric block made by mixing SC-102 Hardener of Lord Chemical and SC-102 Resin of Lord Chemical and TCME was also evaluated.

### EXAMPLE 4. High melting, high molecular weight polymers as binders

The system comprises:
Binder: Poly(isobutyl methacrylate), MW 260,000
Indicator: Methyltricosa-10,12-diynoate (TCME)
Procedure: Two grams of poly(isobutyl methacrylate), MW 260,000 was mixed with 2g of TCME and heated at ∼130°C in a test tube while stirring with a mechanical stirrer at high speed. A highly viscous melt was obtained. The mixture was cooled slowly from 130°C to room temperature. A solid clear block (slightly rubbery) was obtained. When the block was cooled in a freezer it became opaque and upon irradiation with 5 Gy of 100 KVP X-ray it developed a blue color and,when brought to room temperature it turned red.

Effect of other variables such as nature and concentration of diacetylenes, binders, solvents, plasticizers and effect of time and temperature of melting and annealing were studied.

### EXAMPLE 5. Use of hot melt adhesives.

The system comprises:
Binder: HRJ-12531 Resin (a polyacrylates pressure sensitive adhesive) of Schenectady Chemicals, Canada
Indicators: Methyltricosa-10,12-diynoate (TCME) and 4BCMU [5,7-dodecadiyn-1,12-bis(n-butoxycarbonyl methylurethane), R-C=C-C=C-R, where R = (CH₂)₄OCONHCH₂COO(CH₂)₄H]
Procedure: About 2g of the adhesive was heated in a test tube at about 120°C to melt. To the melt was added different diacetylenes such as TCME and 4BCMU and mixed using a mechanical stirrer. After about 15 minutes the melt was allowed to cool at room temperature.

The sample was frozen at -20°C and irradiated at ∼4°C with 5 Gy of 100 KVP X-ray. The irradiated portion of the TCME sample turned blue and changed to red when brought to room temperature. The sample of 4BCMU remained blue and was slightly opaque but became red and clear at ∼70°C.

A number of other polymers were also used.

### EXAMPLE 6. Increase in reactivity by cocrystallization

The system comprises:
Indicators: Tricosa-10,12-diynoic acid (TC) and pentacosa-10,12-diynoic acid (PC)
Binder: PPG-DM-560 (Polypropylene glycol diacrylate mol.wt. 560)
Catalyst: 5% Benzoyl peroxide in dioctylphthalate
Promotor: N,N-Dimethyl-p- toluidine
Solvent: Ethylene Glycol Diacetate (ED)
procedure: In a vial 1g TC and 0.25g PC were dissolved in 10g PPG-DM-560. To the mixture was added 3 drops of promoter and 0.5 ml of catalyst and mixed. The mixture was allowed to cure in the oven at 40°C. The sample was irradiated with 5 Gy of 100 KVP X-ray. The irradiated portion of the sample turned blue. The reactivity of TC and PC mixture was higher than individual diacetylene. When the samples were heated at 60°C, they all turned red and transparent.

Salts of TC and PC made with different amines and metal hydroxides were also used instead of TC and PC. Effects of nature and concentration of salt and degree of neutralization were also studied. Instead of TC and PC one can used their salts described in US Patent Nos. 5,149,617, 5,095,134 and 4,215,208.

### EXAMPLE 7. Cocrystallization of liquid diacetylenes

The system comprises:
Indicators: Methyltricosa-10,12-diynoate (TCME) and Methylpentacosa-10,12-diynoate (PCME)
Binder: PPG-DM-560 (Polypropylene glycol diacrylate mol.wt. 560)
Catalyst: 5% Benzoyl peroxide in dioctylphthalate
Promotor: N,N-Dimethyl-p- toluidine
Procedure: In a vial 3.8g TCME and 1.9g PCME were dissolved in 10g PPG-DM-560. To the mixture was added 3 drops of promoter and 1.25 ml of catalyst and mixed. The mixture was allowed to cure in the oven at 40°C and cooled to 20°C in a freezer. The sample was irradiated cold with 5 Gy of 100 KVP X-ray. The irradiated portion of the sample turned blue and changed to red when brought to RT.

A variety of others binders, Monomeric and oligomeric with and without polymers were tried.

### EXAMPLE 8. Curing with UV light.

The system comprises:
Binder: Polypropylene glycol dimethacrylate mol.wt. 560 (PPG-DM-560)
Indicator: Methyltricosa-10,12-diynoate (TCME)
UV catalyst: 10% benzoin methyl ether in dibutyl phthalate
Procedure: In a test tube was added ∼2ml of the PPG-DM-560, 1 ml of TCME and 2 drops of the UV catalyst and mixed. The mixture was then exposed to a long wavelength (350 nm) UV lamp at a distance of 25 cm. The sample solidified within a few minutes.

The sample was frozen at -20°C and irradiated with 5 Gy of 100 KVP X-ray. The irradiated portion turned blue and changed to red' when brought to room temperature.

### EXAMPLE 9. Polymeric diacetylene as a binder and indicator. '

The system comprises:
Diol: 10,12-Dodecadiyene diol
Diisocyanate: Toluene diisocyanate
Catalyst: Metacure T-12 catalyst, Air Products, Allentown, PA
Procedure: About 1g of the diol was heated at 60°C to melt and poly(propylene glycol) tolylene diisocyanate was added and mixed in a test tube. Two drops of the catalyst was added, mixed and allowed to solidify. The solid block was annealed at 60°C for a day. When irradiated with 50 Gy of 100 KVP X-ray, a faint red color was obtained.

### EXAMPLE 10. Oligomeric acrylates

The system comprises:
Binder: Polypropylene glycol diacrylate mol.wt. 540 (PPG-DA-540)
Catalyst: Benzoyl peroxide
Plasticizer: Dibutyl phthalate
Indicator: Methyltricosa-10,12-diynoate (TCME)
Procedure: In a test tube was taken 10g of PPG-DM-540, 3.75g of TCME and 0.75g 10% benzoyl peroxide in dibutyl phthalate. The test tube was annealed at 65°C. The mixture became a highly transparent solid within 20 minutes. The test tube was removed from the oven after 40 minutes.

The samples became opaque in the refrigerator (∼7°C). The sample was irradiated cold over an ice block (a part of the test tube was covered with a metal plate to block X-ray) with 5 Gy of 100 KVP X-ray. The irradiated portion turned blue and became red when brought to room temperature.

Effects of other variables such as nature and concentration of promotor, catalyst, solvent, binder and diacetylene, and effect time and temperature required for curing were studied.

### EXAMPLE 11. Casting a plaque and film dosimeter

The system comprises:
Indicator: 4BCMU [5,7-dodecadiyn-1,12-bis(n-butoxycarbonyl methylurethane)]
Binder: Poly(ethylene-co-acrylic acid-15% acrylic acid)
release coat: Miller-Stephenson; Urethane Conformal Coating
Procedure: Glass plate 15x25 cm² plates were spray coated with the urethane conformal coating of Miller-Stephenson, Danbury, CT. A mask of 900 microns was placed on one plate and both the plates were placed in an oven at -95°C. A mixture of 3g of 4BCMU and 7g of poly(ethylene-co-acrylic acid-15%) was melted in a test tube. The mixture was poured in the center of the glass plate with the mask and the other glass plate was pressed over it. Excess melt came out through the window of the mask. The assembly of the glass plates was allowed to cool at RT. The plates were removed to get the plaque. The thick plaque was translucent.

A number of other binders were tried with and without additives such as plasticizers and solvents.

### EXAMPLE 12. Self-supporting thin films.

The system comprises:
Binder: Poly(ethylene-co-acrylic acid-15% acrylic acid)
Indicator: 4BCMU [5,7-dodecadiyn-1,12-bis(n-butoxycarbonyl methylurethane)]
Procedure: 0.1, 0.2, 0.3, 0.4 and 0.5 gram of 4BCMU was mixed with 5g poly(ethylene-co-acrylic acid 15%). The mixture was heated at ∼150°C to melt and mixed with a mechanical stirrer. The molten mixtures were poured between two glass plates pre-coated with a mold release, using spacer of 150 microns and pressed to make a circle of about 5 centimeter diameter. The samples were cooled to RT and films, which were almost transparent, were removed from the glass plates.

The films of 4BCMU/polymer were exposed to 0.25 Gy of 100 KVP X-ray. The films developed blue color. The color intensity was proportional to the concentration of 4BCMU.

Effects of other variables such as nature and concentration of diacetylenes, binders, solvents, plasticizers, and co-binder and effect of time and temperature of melting and annealing were studied.

### EXAMPLE 13. Solid diacetylene and solvent

The system comprises:
Indicator: 4BCMU [5,7-dodecadiyn-1,12-bis(n-butoxycarbonyl methylurethane)]
Binder: PPG-dimethacrylate MW-560 (PPG-DM-560)
Solvent: Ethyl salicylate
Catalyst: Benzoyl peroxide (1g in 10g of dibutyl phthalate)
Procedure: A 2g sample of 4BCMU was dissolved in 20g of PPG-DM-560 in a jar. To the solution was added 4g of ethyl salicylate and 0.5g of 10% benzoyl peroxide solution in dibutyl phthalate. The content was mixed and heated at ∼80°C in a heating block. The mixture became a transparent solid in about 30 minutes. After 30 minutes the jar was removed from the heating block and allowed to cool at room temperature.

The sample was irradiated at room temperature with 5 Gy of 100 KVP X-ray using a metal collimator made from washers having 0.7 cm hole. The irradiated portion turned blue. A same portion of the sample was irradiated again with 5 Gy of 100 KVP X-ray from a different angle using the metal collimator. The irradiated portion also tuned blue. The sample was heated at 80°C in an oven for 30 minutes. The irradiated portions changed from blue-to-red. The sample remained transparent for almost 8 hours at room temperature. After a day the jar became opaque. The jar was irradiated with 5 Gy of 100 KVP X-ray from third angle using the metal collimator, the irradiated portion turned blue and upon heating at 80°C, the mass became transparent. All three irradiated portions can be seen.

EXAMPLE 14. A dye in molten polymer
Indicator: Leuco malachite green
Binder: Polyethylene-co-polybutylene, Mw 2,500 (PEB-2500)
Procedure: 0.2g dye was added in 2g of molten in PEB-2500 and mixed by stirring at ∼120°C in a test tube. The molten mass was allowed to cool. When exposed to 50 Gy of 100 KeV, it developed faint but noticeable green color.

### EXAMPLE 15. Heat fixable block

The system comprises:
Indicator: 166 [2,4-Hexadiyn-1,6-bis(n-Hexylurethane)]
Binder: PPG-dimethacrylate MW-560
Solvent: Ethyl salicylate
Catalyst: Benzoyl peroxide (1g in 10g of dibutyl phthalate)
Promotor: N,N-Dimethyl-p- toluidine
Procedure: A 10g sample of 166 was dissolved in 100g of PPG-DM-560 and 30g ethyl salicylate in a beaker. To 10g of the above mixture in a vial was added 1 ml of 10% benzoyl peroxide solution in dibutyl phthalate and 0.25 ml of the promotor. The mixture was stirred and the vial was quenched with liquid nitrogen and allowed to come to room temperature. Another similar vial was placed in a freezer at -20°C and removed after a day from the freezer. A third similar vial was cooled in a refrigerator at ∼7°C. The vials were solid and opaque.

The samples were irradiated at room temperature with 5 Gy of 100 KVP X-ray. The irradiated portion turned red. The irradiated samples were heated at 70°C in an oven for 30 minutes. The samples became transparent and irradiated portions changed from red-to-purple/blue.

Effects of concentration of 166, different solvents and their concentration were studied.

### EXAMPLE 16. Coating of on a substrate

The system comprises:
Binder: Poly(ethylene-co-acrylic acid-15% acrylic acid)
Indicator: 4BCMU [5,7-dodecadiyn-1,12-bis(n-butoxycarbonyl methylurethane)]
Procedure: 0.5 gram of 4BCMU was mixed with 5g poly(ethylene-co-acrylic acid 15%). The mixture was heated at ∼150°C to melt and mixed with a mechanical stirrer. The molten mixtures were poured on a polyester film mounted on a draw down coating unit in an oven at 80°C. The mixture was coated with #30 hot wire wound rod. The sample was cooled to RT. The coating was almost transparent.

A piece of the coated film of 4BCMU/polymer was exposed to 0.25 Gy of 100 KVP X-ray. The coating developed light blue color.

EXAMPLE 17. A dye plus ethyltrichloroacetate in molten polymer
Indicator: Leuco malachite green
Binder: Polyethylene-co-polybutylene, Mw 2,500 (PEB-2500)
Activator: Ethyltrichloroacetate
Procedure: 0.2g Leuco malachite green dissolved in 1 ml of ethyltrichloroacetate was added in 2g of molten in PEB-2500 and mixed by stirring at ∼120°C in a test tube. The molten mass was allowed to cool. When exposed to 20 Gy of 100 KeV, it developed light green color, which was much darker than that of example 14.

### EXAMPLE 18. Solid diacetylene and solvent

The system comprises:
Indicator: 4BCMU [5,7-dodecadiyn-1,12-bis(n-butoxycarbonyl methylurethane)]
Binder: PPG-dimethacrylate MW-560 (PPG-DM-560)
Solvent: Ethylene glycol diacetate
Catalyst: Benzoyl peroxide (1g in 10g of dibutyl phthalate)
Promotor: N,N-Dimethyl-p- toluidine
Procedure: 1.25g of 4BCMU was dissolved in 10g of PPG-DM-560 and 2g of ED and 0.05g of the promotor were added. To the mixture was added 0.5g of the catalyst solution, mixed and allow to set at 40°C. After a day the vial was cooled in a freezer for a day and brought to room temperature. The sample was irradiated at room temperature with 10 Gy of collimated 100 KVP X-ray. The irradiated portion turned blue. The sample was heated at 60°C in an oven for 30 minutes. The irradiated portions changed from blue-to-red. Figures 6 and 7 are representative of the side and top respectively. The sample remained transparent for almost 8 hours at room temperature.

EXAMPLE 19. Plaque dosimeter

In a series of test 2g of polyvinyl acetate was taken with varied amount of 0.1,0.3,0.6 and 0.9g diacetylene 344. The mixture was heated to 130°C and mixed with a mechanical stirrer and poured on a 4mil PET film on a glass plate at 120°C. Another PET film was placed on the molten mixture followed by a glass plate and 20 lb weight. The molten liquid spread in the form of circles. The glass plate assembly was brought to room temperature and allowed to cool. The films were removed, cut and irradiated with 0.25 Gy of 100KeV X-ray. The film developed light blue color:

### EXAMPLE 20. Polymeric gel

The system comprises:
Binder: Liquid Plastic, Limit MFG Corp., Richardson, TX
Indicator: TCME
In a vial 3g of TCME and 10g of liquid polymer (Limit MFG Corp) were mixed and heated at 120°C. The mixture became clear liquid. Upon cooling to room temperature it became soft gel like rubbery transparent solid. When cooled to 7°C, it became opaque and upon irradiation with 5 Gy of 100 KeV X-ray, it turned blue. Upon bringing the sample to room temperature, the sample became clear and the irradiated portion turned red.

Similar results were obtained with transparent clear paraffin candle gel obtained from The Chemistry Store, Pompano Beach, FL.

EXAMPLE 21. Brackytherapy and alpha particles

A commercially available antistatic source of 50 micro Curie polonium-210 was placed on a block prepared according to Example 18 for ten minutes. Polonium-210 emits alpha particles of 4.5 MeV. The image of the source was obtained in blue color. When the block was heated it turned red. The results indicate that the block can be used for monitoring alpha particle therapy treatment. When boron-10 is irradiated with neutrons, it emits alpha particles. Thus this type of dosimeter containing boron-10 can be used for monitoring neutrons.

Similar results were obtained when the polonium-210 source was placed on a plaque of example 11.

Similarly other radiation sources such as Ytterbium-169, Iodine-125 and other seeds used for brackytherapy can be placed and imaged. A hole can be drill in the block or the block can be casted with holes to fit the brackytherapy seed.

### EXAMPLE 22. Irradiation with therapy radiation

The system comprises:
Binder: Polypropylene glycol diacrylate mol.wt. 540 (PPG-DA-540)
Catalyst: Benzoyl peroxide
Promotor: N,N-Dimethyl-p-toluidine
Plasticizer: Dibutyl phthalate
Indicator: Methyltricosa-10,12-diynoate (TCME)
Procedure: In a one liter jar was taken 300g of PPG-DM-540, 90g of TCME and 2g of 10% benzoyl peroxide in dibutyl phthalate. To the mixture was added 0.25g of promotor, mixed and allowed to solidify at room temperature. The mixture became a highly transparent solid within 20 minutes.

The sample became opaque in ice water. The sample was irradiated at 4°C in ice-water mixture with 10 Gy of 10 MeV X-ray. Similarly another sample was irradiated with 10 Gy of 15 MeV electrons. The irradiated portions turned blue and became red when the jars brought to room temperature.

EXAMPLE 23. Scanning for 3D dosimetry

A sample prepared according to example 18 was scanned using an optical scanned similar to that described by Wolodzko et al. [J.G. Wolodzko, C. Marsden and A. Appleby, Med. Phys. Vol. 26, 2506 (1999)]. Three-dimensional imaging was accomplished by tomographic reconstruction from two-dimensional images acquired using a diffuse fluorescent light source (400-700 nm), a digital charged-couple device camera and SPECT (single photon emission computed tomography) software.

The sample, similar to that shown in Figures 6 and 7, was placed in a rectangular water bath located inside the scanning apparatus. Within the water bath the sample was rotated through 360 degrees and a two-dimensional image was acquired every 3.6 degrees, for a total of 100 images. Transverse reconstructions were produced as 128 x 128 matrices using the SPECT software, to provide images of sections through the sample. Figure 8 shows a reproduction of a summation of 16 single transverse adjacent slices through the center of the cylindrical sample to improve signal/noise. The outer dark ring on these images is the glass wall of the sample container. The inner dark spot is the region that was irradiated.

A diameter across the transverse beam image illustrated in Figure 8 was selected and a relative density profile is shown in Figure 9. The density profile and isodose plots demonstrate the sharp fall-off in radiation dose at the edges of the irradiated region. Similar density profile and isodose plots along the beam and 3D dose distribution in the block were obtained.

In order to make corrections for scattering and refractive index the sample can be placed in a liquid such as glycerol and other higher refractive index fluid and scanned. As an alternative a block can be scanned before and after irradiation and subtracting the before radiation scan that from the radiated one.

## Claims

1. A radiation sensitive device for monitoring radiation dose comprising at least one radiation sensitive material in a polymeric binder wherein said radiation sensitive material is capable of undergoing an observable change when contacted with radiation wherein said device is rod-like with an aspect ratio of below 20: 1, or is block-like and has an aspect ratio of less 5: 1.

2. The radiation sensitive device of claim 1 wherein said device comprises a molded polymer or casted polymer.

3. The radiation sensitive device of claim 1, wherein said radiation sensitive material comprises at least one material selected from a diacetylene; a radiochromic dye; a pH sensitive dye; a leuco dye; a carbinol dye and a radiation sensitive complex.

4. The radiation sensitive device of claim 3 wherein said diacetylene comprises at least one compound selected from 2,4-hexadiyn-1,6-diol, 3,5-octadiyn-1,8-diol, 4,6-decadiyn-1,10-diol, 5,7-dodecadiyn-1,12-diol, tricosa-10,12-diynoic acid, pentacosa-10,12-diynoic acid, their derivatives, including 2,4-hexadiyn-1,6-bis (n-Hexylurethane); 2,4-hexadiyn-1,6-bis (n-pentyl-urethane); 2,4-hexadiyn-1-mono (n-pentyl-urethane)-6-mono (n-hexylurethane); 2,4-hexadiyn-1-mono (n-hexyl-urethane)-6-mono (phenyl acetate); 5,7-dodecadiyn-1,12-bis(n-butoxycarbonyl methylurethane); fuschin cyanide; hexahydroxy ethyl violet cyanide; pararose aniline cyanide; a tetrazolium dye; blue tetrazolium, tetrazolium violet, triphenyl tetrazolium chloride; leuco crystal violet; leuco malachite green; malachite green carbinol base; p-roseaniline base; pentamethoxytriphenylmethanol; bromocresol purple; bromophenol blue and co-crystallized mixtures thereof.

5. The radiation sensitive device of claim 1 wherein said radiation sensitive material is a complex of ammonium iron citrate.

6. The radiation sensitive device of claim 1 further comprising an activator selected from halocarbon, a halonium, a sulfonium, ethyl trichloroacetate, heptachloropropane, ethyltrichloroacetate, chloroacetic acid, chloropropionic acid, hexachlorocyclohexane, methyltrichloroacetimidate, trichloroacetic acid, trichloroacetamide, trichloro ethanol, trichloro methyl benzyl acetate, trichloro methyl propanol hydrate, trichloro propane, chlorinated polymers, diphenyliodinium iodide, diphenyliodinium hexafluoroarsenate, diphenyliodinium chloride, trimethylsulfonium iodide and triphenylsulfonium hexafluoroantimonate.

7. The radiation sensitive device of claim 1 wherein said binder is a polymer prepared by polymerization of a monomer or oligomer by radical or cationic polymerization process using initiator, and said monomer is selected from olefins, vinyls, acrylates, methylmethacrylate, styrene and acrylic acid, or oligomeric methylmethacrylate, methylacrylate; polypropylenedimethacrylate; hexamethylene diisocyanate, polyethylene glycol, polypropylene glycol or a reaction product of one of diol with diisocyanate, diepoxide with primary amine, primary diamine or secondary diamine, or a diamine with a diisocyanate.

8. The radiation sensitive device of claim 1 further comprising a solvent chosen from butoxy-2-ethylstearate, butyrolactone, diethyl fumarate, dimethyl maleate, dimethylcarbonate, dioctyl phthalate, ethylene glycol dimethyl ether, ethyl salicylate, polyethylene glycol dimethylether, propylene carbonate, triacetin, benzyl ether, dodecyl-1,2-methyl pyrrolidone, ethoxyethylacetate, ethylene glycol diacetate, ethyltrichloroacetate, methylpyrrolidone, methyl sulfoxide, polyethylene glycols of different molecular weight, dimethylformamide, cyclohexane, p-dioxane, tetrahydrofuran, p-xylene and dioctylphthalate or dibutylphthalate.

9. The radiation sensitive device of claim 1 further comprising a converter selected from a radio/electron luminescence or fluorescence phosphor which emits UV light, or lower energy X-ray or electrons when contacted with high energy X-rays, gamma rays, or electrons.

10. The radiation sensitive device of claim 1 wherein said device has a thickness larger than 0.1 millimeter.

11. The radiation sensitive device of claim 1 wherein said observable change is selected from color change, change in fluorescence, phosphorescence, change in paramagnetic or NMR relaxation rate, when exposed to said radiation, liquid to solid, solid to liquid, or change in transparency.

12. The radiation sensitive device of claim 1 further comprising a UV absorber or a surfactant.

13. A process of making a radiation sensitive molded or casted shaped polymeric device for monitoring radiation dose prepared by polymerization of at least one monomer or oligomer containing at least one radiation sensitive material capable of developing or undergoing a color, fluorescence, or opacity change when exposed to UV, X-ray, gamma ray, electron, protons, alpha particles or neutron radiation activator wherein said device is rod-like with an aspect ratio of below 20: 1, or is block-like and has an aspect ratio of less 5:1.

14. A process of making a radiation sensitive molded or casted shaped polymeric device for monitoring radiation dose prepared by solidification of molten polymer containing at least one radiation sensitive material capable of developing or undergoing a color, fluorescence, or opacity change when exposed to radiation wherein said device is rod-like with an aspect ratio of below 20:1, or is block-like and has an aspect ratio of less 5:1.

15. A method of imaging and measuring a three-dimensional dose distribution of a radiation source in the device of claim 1 comprising the steps of irradiating said device such that the optical properties are changed upon irradiation, optically scanning the object at various angles, detecting and measuring light projection data indicative of optical changes in the device, calibrating the optical change in the device to the dose of the energy; and mapping the dose of the energy in the object.

16. An optical tomographic scanner for imaging optical properties of device of claim 1 comprising at least one light source for illuminating the device, at least one light detector for measuring light that has interacted with the object, a mechanism that controls the relative motion of the object, the light source or sources, and the light detector or detectors, a tank filled with a liquid in which the object is immersed for refractive index matching, so that the light rays passing through the device are propagated in straight lines; and a computer for controlling the scanner mechanism and for calculating the three dimensional distribution of optical properties inside the object.

17. A method of detecting, measuring and displaying a non-uniform dose of radiation or by forming a visible permanent three dimensional image in said device of claim 1 wherein said three dimensional image is representative of the three dimensional distribution of dose of said radiation to which said device is exposed.

## Patentansprüche

1. Strahlungsempfindliche Vorrichtung zur Überwachung der Strahlungsdosis, umfassend wenigstens ein strahlungsempfindliches Material in einem polymeren Bindemittel, wobei das strahlungsempfindliche Material zu einer beobachtbaren Veränderung befähigt ist, wenn es Strahlung ausgesetzt wird, wobei die Vorrichtung stabförmig mit einem Aspektverhältnis von unter 20:1 ist oder blockartig ist und ein Aspektverhältnis von weniger als 5:1 hat.

2. Strahlungsempfindliche Vorrichtung gemäß Anspruch 1, wobei die Vorrichtung ein geformtes Polymer oder ein gegossenes Polymer umfasst.

3. Strahlungsempfindliche Vorrichtung gemäß Anspruch 1, wobei das strahlungsempfindliche Material wenigstens ein Material umfasst, das aus einem Diacetylen, einem Radiochromfarbstoff, einem pH-empfindlichen Farbstoff, einem Leukofarbstoff, einer Leukobase eines Triphenylmethanfarbstoffs und einem strahlungsempfindlichen Komplex ausgewählt ist.

4. Strahlungsempfindliche Vorrichtung gemäß Anspruch 3, wobei das Diacetylen wenigstens eine Verbindung umfasst, die aus 2,4-Hexadiin-1,6-diol, 3,5-Octadiin-1,8-diol, 4,6-Decadiin-1,10-diol, 5,7-Dodecadiin-1,12-diol, Tricosa-10,12-diinsäure, Pentacosa-10,12-diinsäure, ihren Derivaten einschließlich 2,4-Hexadiin-1,6-bis(n-hexylurethan); 2,4-Hexadiin-1,6-bis(n-pentylurethan); 2,4-Hexadiin-1-mono(n-pentylurethan)-6-mono(n-hexylurethan); 2,4-Hexadiin-1-mono(n-hexylurethan)-6-mono(phenylacetat); 5,7-Dodecadiin-1,12-bis(n-butoxycarbonylmethylurethan); Fuchsincyanid; Hexahydroxyethylviolettcyanid; Pararosaanilincyanid; einem Tetrazoliumfarbstoff; Tetrazoliumblau, Tetrazoliumviolett, Triphenyltetrazoliumchlorid; Leukokristallviolett; Leukomalachitgrün; Malachitgrün-Carbinolbase; p-Rosaanilinbase; Pentamethoxytriphenylmethanol; Bromkresolpurpur; Bromphenolblau und cokristallisierten Gemischen davon ausgewählt ist.

5. Strahlungsempfindliche Vorrichtung gemäß Anspruch 1, wobei das strahlungsempfindliche Material ein Komplex von Ammoniumeisencitrat ist.

6. Strahlungsempfindliche Vorrichtung gemäß Anspruch 1, die weiterhin einen Aktivator umfasst, der aus Halogenkohlenstoff, einem Halonium, einem Sulfonium, Ethyltrichloracetat, Heptachlorpropan, Ethyltrichloracetat, Chloressigsäure, Chlorpropionsäure, Hexachlorcyclohexan, Methyltrichloracetimidat, Trichloressigsäure, Trichloracetamid, Trichlorethanol, Trichlormethylbenzylacetat, Trichlormethylpropanolhydrat, Trichlorpropan, chlorierten Polymeren, Diphenyliodiniumiodid, Diphenyliodiniumhexafluoroarsenat, Diphenyliodiniumchlorid, Trimethylsulfoniumiodid und Triphenylsulfoniumhexafluoroantimonat ausgewählt ist.

7. Strahlungsempfindliche Vorrichtung gemäß Anspruch 1, wobei das Bindemittel ein Polymer, das durch Polymerisation eines Monomers oder Oligomers durch ein radikalisches oder kationisches Polymerisationsverfahren unter Verwendung eines Starters hergestellt ist, und das Monomer aus Olefinen, Vinylverbindungen, Acrylaten, Methylmethacrylat, Styrol und Acrylsäure ausgewählt ist, oder oligomeres Methylmethacrylat, Methylacrylat; Polypropylendimethacrylat; Hexamethylendiisocyanat, Polyethylenglycol, Polypropylenglycol oder ein Reaktionsprodukt entweder eines Diols mit einem Diisocyanat, eines Diepoxids mit einem primären Amin, einem primären Diamin oder einem sekundären Diamin oder eines Diamins mit einem Diisocyanat ist.

8. Strahlungsempfindliche Vorrichtung gemäß Anspruch 1, die weiterhin ein Lösungsmittel umfasst, das aus Butoxy-2-ethylstearat, Butyrolacton, Diethylfumarat, Dimethylmaleat, Dimethylcarbonat, Dioctylphthalat, Ethylenglycoldimethylether, Ethylsalicylat, Polyethylenglycoldimethylether, Propylencarbonat, Triacetin, Benzylether, Dodecyl-1,2-methylpyrrolidon, Ethoxyethylacetat, Ethylenglycoldiacetat, Ethyltrichloracetat, Methylpyrrolidon, Methylsulfoxid, Polyethylenglycolen mit unterschiedlichem Molekulargewicht, Dimethylformamid, Cyclohexan, p-Dioxan, Tetrahydrofuran, p-Xylol und Dioctylphthalat oder Dibutylphthalat ausgewählt ist.

9. Strahlungsempfindliche Vorrichtung gemäß Anspruch 1, die weiterhin einen Konverter umfasst, der aus einem Radio/elektronenlumineszenz- oder -fluoreszenzleuchtstoff, der UV-Licht oder niederenergetische Röntgenstrahlen oder Elektronen emittiert, wenn er hochenergetischen Röntgenstrahlen, Gammastrahlen oder Elektronen ausgesetzt wird, ausgewählt ist.

10. Strahlungsempfindliche Vorrichtung gemäß Anspruch 1, wobei die Vorrichtung eine Dicke von mehr als 0,1 Millimeter hat.

11. Strahlungsempfindliche Vorrichtung gemäß Anspruch 1, wobei die beobachtbare Veränderung aus einer Farbänderung, Änderung der Fluoreszenz, Phosphoreszenz, Änderung der paramagnetischen oder NMR-Relaxationsrate, wenn sie der Strahlung ausgesetzt ist, flüssig nach fest, fest nach flüssig oder einer Änderung der Transparenz ausgewählt ist.

12. Strahlungsempfindliche Vorrichtung gemäß Anspruch 1, die weiterhin einen UV-Absorber oder ein Tensid umfasst.

13. Verfahren zur Herstellung einer strahlungsempfindlichen, geformten oder gegossenen, in Form gebrachten polymeren Vorrichtung zur Überwachung der Strahlungsdosis, hergestellt durch Polymerisation wenigstens eines Monomers oder Oligomers, das wenigstens ein strahlungsempfindliches Material enthält, das eine Farbe, Fluoreszenz oder Opazität entwickeln oder eine Änderung derselben erfahren kann, wenn es UV, Röntgen-, Gammastrahlen, Elektronen, Protonen, Alphateilchen oder einem Neutronenstrahlungsaktivator ausgesetzt ist, wobei die Vorrichtung stabförmig mit einem Aspektverhältnis von unter 20:1 ist oder blockartig ist und ein Aspektverhältnis von weniger als 5:1 hat.

14. Verfahren zur Herstellung einer strahlungsemphndlichen, geformten oder gegossenen, in Form gebrachten polymeren Vorrichtung zur Überwachung der Strahlungsdosis, hergestellt durch Verfestigung eines geschmolzenen Polymers, das wenigstens ein strahlungsempfindliches Material enthält, das eine Farbe, Fluoreszenz oder Opazität entwickeln oder eine Änderung derselben erfahren kann, wenn es Strahlung ausgesetzt ist, wobei die Vorrichtung stabförmig mit einem Aspektverhältnis von unter 20:1 ist oder blockartig ist und ein Aspektverhältnis von weniger als 5:1 hat.

15. Verfahren zur Bildgebung und Messung einer dreidimensionalen Dosisverteilung einer Strahlungsquelle in der Vorrichtung gemäß Anspruch 1, umfassend die Schritte des Bestrahlens der Vorrichtung in einer solchen Weise, dass die optischen Eigenschaften bei der Bestrahlung geändert werden, des optischen Abtastens des Objekts unter verschiedenen Winkeln, das Nachweisen und Messen von Lichtprojektionsdaten, die auf optische Veränderungen in der Vorrichtung hinweisen, das Eichen der optischen Veränderung in der Vorrichtung auf die Energiedosis und das Kartieren der Energiedosis in dem Objekt.

16. Optischer tomographischer Scanner zur Bildgebung von optischen Eigenschaften der Vorrichtung gemäß Anspruch 1, umfassend wenigstens eine Lichtquelle zum Beleuchten der Vorrichtung, wenigstens einen Lichtdetektor zum Messen von Licht, das mit dem Objekt in Wechselwirkung getreten ist, einen Mechanismus, der die Relativbewegung des Objekts, der Lichtquelle oder -quellen sowie des Lichtdetektors oder der Lichtdetektoren steuert, ein Behälter, der mit einer Flüssigkeit gefüllt ist, in die das Objekt zur Anpassung des Brechungsindex eingetaucht wird, so dass sich die durch die Vorrichtung tretenden Lichtstrahlen auf Geraden ausbreiten, und einen Computer zum Steuern des Scannermechanismus und zum Berechnen der dreidimensionalen Verteilung der optischen Eigenschaften innerhalb des Objekts.

17. Verfahren zum Nachweisen, Messen und Anzeigen einer ungleichmäßigen Strahlungsdosis durch Bilden eines sichtbaren bleibenden dreidimensionalen Bildes in der Vorrichtung gemäß Anspruch 1, wobei das dreidimensionale Bild repräsentative für die dreidimensionale Verteilung der Dosis der Strahlung, der die Vorrichtung ausgesetzt ist, ist.

## Revendications

1. Dispositif sensible aux rayonnements destiné à surveiller une dose de rayonnements comprenant au moins un matériau sensible aux rayonnements dans un liant polymérique, dans lequel ledit matériau sensible aux rayonnements est capable de subir un changement observable lorsqu'il est mis en contact avec un rayonnement, dans lequel ledit dispositif est de type tige avec un rapport géométrique inférieur à 20/1, ou est de type bloc et a un rapport géométrique inférieur à 5/1.

2. Dispositif sensible aux rayonnements selon la revendication 1, dans lequel ledit dispositif comprend un polymère moulé ou un polymère coulé.

3. Dispositif sensible aux rayonnements selon la revendication 1, dans lequel ledit matériel sensible aux rayonnements comprend au moins un matériau sélectionné parmi un diacétylène ; un colorant radiochromique ; un colorant sensible au pH ; un leuco-colorant ; un colorant carbinol et un complexe sensible aux rayonnements.

4. Dispositif sensible aux rayonnements selon la revendication 3, dans lequel ledit diacétylène comprend au moins un composé sélectionné parmi le 2,4-hexadiyn-1,6-diol, le 3,5-octadiyn-1,8-diol, le 4,6-décadiyn-1,10-diol, le 5,7-dodécadiyn-1,12-diol, l'acide tricosa-10,12-diyonique, l'acide pentacosa-10,12-diyonique, leurs dérivés, y compris le 2,4-hexadiyn-1,6-bis(n-hexyluréthane) ; le 2,4-hexadiyn-1,6-bis(n-pentyluréthane) ; le 2,4-hexadiyn-1-mono(n-pentyluréthane)-6-mono(n-hexyluréthane) ; le 2,4-hexadiyn-1-mono(n-hexyluréthane)-6-mono(phénylacétate) ; le 5,7-dodécadiyn-1,12-bis(n-butoxycarbonylméthyluréthane) ; le cyanure de fuschine ; le cyanure de violet hexahydroxyéthyle ; le cyanure de pararosaniline ; un colorant au tétrazolium ; du bleu de tétrazolium, du violet de tétrazolium, le chlorure de triphényltétrazolium ; le violet de leucocristal ; le vert de leucomalachite ; une base carbinol de vert de malachite ; une base de p-rosaniline ; le pentaméthoxyphénylméthanol ; le pourpre de bromocrésol ; le bleu de bromophénol et les mélanges cocristallisés de ceux-ci.

5. Dispositif sensible aux rayonnements selon la revendication 1, dans lequel ledit matériau sensible aux rayonnements est un complexe de citrate ferrique d'ammonium.

6. Dispositif sensible aux rayonnements selon la revendication 1 comprenant en outre un activateur sélectionné parmi l'halocarbure, un halonium, un sulfonium, le trichloroacétate d'éthyle, l'heptachloropropane, le trichloroacétate d'éthyle, l'acide chloroacétique, l'acide chloropropionique, l'hexachlorocyclohexane, le trichloroacétimidate de méthyle, l'acide trichloroacétique, le trichloroacétamide, le trichloroéthanol, le trichlorométhylbenzylacétate, l'hydrate de trichlorométhylpropanol, le trichloropropane, les polymères chlorés, l'iodure de diphényliodinium, l'hexafluoroarsénate de diphényliodinium, le chlorure de diphényliodinium, l'iodure de triméthylsulfonium et l'hexafluoroantimonate de triphéthylsulfonium.

7. Dispositif sensible aux rayonnements selon la revendication 1, dans lequel ledit liant est un polymère préparé par polymérisation d'un monomère ou d'un oligomère par un procédé de polymérisation radicalaire ou cationique utilisant un initiateur, et ledit monomère est sélectionné parmi les oléfines, les vinyles, les acrylates, le méthacrylate de méthyle, le styrène et l'acide acrylique, ou le méthacrylate de méthyle oligomérique, l'acrylate de méthyle ; le diméthacrylate de polypropylène ; le diisocyanate d'hexaméthylène, le polyéthylène glycol, le polypropylène glycol ou un produit de réaction de l'un parmi un diol avec un diisocyanate, un diépoxide avec une amine primaire, une diamine primaire ou diamine secondaire, ou une diamine avec un diisocyanate.

8. Dispositif sensible aux rayonnements selon la revendication 1 comprenant en outre un solvant choisi parmi le butoxy-2-éthylstéarate, la butyrolactone, le fumarate de diéthyle, le maléate de diméthyle, le carbonate de diméthyle, le phtalate de dioctyle, l'éther diméthylique d'éthylène glycol, le salicylate d'éthyle, l'éther diméthylique de polyéthylène glycol, le carbonate de propylène, la triacétine, l'éther benzylique, la pyrrolidone de dodécyl-1,2-méthyle, l'acétate d'éthoxyéthyle, le diacétate d'éthylène glycol, le trichloroacétate d'éthyle, la méthylpyrrolidone, le méthylsulfoxyde, les polyéthylène glycols de masse moléculaire différente, le diméthylformamide, le cyclohexane, le p-dioxane, le tétrahydrofurane, le p-xylène et le phtalate de dioctyle ou le phtalate de dibutyle.

9. Dispositif sensible aux rayonnements selon la revendication 1 comprenant en outre un convertisseur sélectionné parmi un phosphore à luminescence ou fluorescence radio/à électrons qui émet une lumière UV, ou des rayons X ou des électrons de plus basse énergie une fois en contact avec des rayons X, des rayons gamma ou des électrons de haute énergie.

10. Dispositif sensible aux rayonnements selon la revendication 1, dans lequel ledit dispositif a une épaisseur supérieure à 0,1 millimètre.

11. Dispositif sensible aux rayonnements selon la revendication 1, dans lequel ledit changement observable est sélectionné parmi un changement de couleur, un changement de fluorescence, de phosphorescence, un changement de la vitesse de relaxation paramagnétique ou RMN, à l'exposition auxdits rayonnements, liquide vers solide, solide vers liquide, ou un changement de transparence.

12. Dispositif sensible aux rayonnements selon la revendication 1 comprenant en outre un absorbeur d'UV ou un agent tensioactif.

13. Procédé de fabrication d'un dispositif moulé ou coulé polymérique sensible aux rayonnements destiné à surveiller une dose de rayonnements préparé par polymérisation d'au moins un monomère ou un oligomère contenant au moins un matériau sensible aux rayonnements capable de développer ou de subir un changement de couleur, de fluorescence ou d'opacité lorsqu'il est exposé à des UV, des rayons X, des rayons gamma, des électrons, des protons, des particules alpha ou un activateur de rayonnements neutroniques, dans lequel ledit dispositif est de type tige avec un rapport géométrique inférieur à 20/1, ou est de type bloc et a un rapport géométrique inférieur à 5/1.

14. Procédé de fabrication d'un dispositif polymérique moulé ou coulé sensible aux rayonnements destiné à surveiller une dose de rayonnements préparé par solidification du polymère fondu contenant au moins un matériau sensible aux rayonnements capable de développer ou de subir un changement de couleur, de fluorescence ou d'opacité lorsqu'il est exposé à des rayonnements, dans lequel ledit dispositif est de type tige avec un rapport géométrique inférieur à 20/1, ou est de type bloc et a un rapport géométrique inférieur à 5/1.

15. Procédé d'imagerie et de mesure d'une distribution de dose tridimensionnelle d'une source de rayonnements dans le dispositif selon la revendication 1 comprenant les étapes consistant à irradier ledit dispositif de telle sorte que les propriétés optiques sont modifiées lors de l'irradiation, balayer optiquement l'objet sous différents angles, détecter et mesurer les données de projection de la lumière indiquant des changements optiques dans le dispositif, étalonner le changement optique dans le dispositif à la dose d'énergie et cartographier la dose d'énergie dans l'objet.

16. Scanner pour tomographie optique destiné à l'imagerie des propriétés optiques du dispositif selon la revendication 1 comprenant au moins une source de lumière destinée à éclairer le dispositif, au moins un détecteur de lumière destiné à mesurer la lumière qui a interagi avec l'objet, un mécanisme qui commande le déplacement relatif de l'objet, de la source ou des sources de lumière et du détecteur ou des détecteurs de lumière, un réservoir rempli d'un liquide dans lequel l'objet est immergé pour adaptation d'indice de réfraction, de sorte que les rayons de lumière passant à travers le dispositif sont propagés en lignes droites ; et un ordinateur destiné à commander le mécanisme du scanner et à calculer la distribution tridimensionnelle des propriétés optiques à l'intérieur de l'objet.

17. Procédé de détection, de mesure et d'affichage d'une dose non uniforme de rayonnements ou par formation d'une image tridimensionnelle permanente visible dans ledit dispositif selon la revendication 1, dans lequel ladite image tridimensionnelle représente la distribution tridimensionnelle de la dose desdits rayonnements auxquels ledit dispositif est exposé.
